(19) Europäisches Patentamt
European Patent Office
Office européen des brevets

(11) Publication number: **0 335 628 B1**

(12) **EUROPEAN PATENT SPECIFICATION**

(45) Date of publication of patent specification: **22.09.93** (51) Int. Cl.5: **B01J 19/00**

(21) Application number: **89302992.6**

(22) Date of filing: **28.03.89**

# (54) Method and system for automated synthesis of chemical products.

(30) Priority: **31.03.88 JP 79104/88**

(43) Date of publication of application:
**04.10.89 Bulletin 89/40**

(45) Publication of the grant of the patent:
**22.09.93 Bulletin 93/38**

(84) Designated Contracting States:
**CH DE FR GB IT LI NL**

(56) References cited:
**EP-A- 0 156 588**
**US-A- 4 598 049**

**ATP - AUTOMATISIERUNGSTECHNISCHE PRAXIS, vol. 29, no. 1, 1987, pages 17-23, München, DE; R.J. UHLIG: "Erstellen von Ablaufsteuerungen für Chargenprozesse mit wechselnden Rezepturen"**

(73) Proprietor: **Takeda Chemical Industries, Ltd.**
**1-1, Doshomachi 4-chome**
**Chuo-ku, OSAKA(JP)**

(72) Inventor: **Hayashi, Nobuyoshi**
**184, Hagiwaradainishi 3-chome**
**Kawanishi-shi Hyogo-ken(JP)**
Inventor: **Sugawara, Tohru**
**6-703, 3 Tagawa 2-chome**
**Yodogawa-ku Osaka(JP)**

(74) Representative: **Hitchcock, Esmond Antony et al**
**Lloyd Wise, Tregear & Co. Norman House**
**105-109 Strand**
**London WC2R 0AE (GB)**

EP 0 335 628 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates in general to a method and a system for automated synthesis of chemical products. More particularly, the present invention is concerned with the automated synthesis method and system which can automatically establish the optimum conditions for a synthesis reaction for producing a given chemical product to thereby control the synthesis reaction process such that the optimum reaction conditions can be realized.

Heretofore, the syntheses of chemical products have been carried out through manual operations by an operator on the basis of empirically obtained knowledge and rules. By way of example, when an aimed chemical product is to be produced through the conventional synthesis procedure by adding a reagent to a reaction phase in which raw material compounds are in equilibrium with intermediate products to thereby cause the reagent to react with an intermediate product, the rate of addition of the reagent is usually determined by an operator intuitively on the basis of his or her experience, wherein such a control method is commonly adopted in which a predetermined amount of reagent is added successively at predetermined time intervals by taking into account the amount of supply of the raw material (stating) compounds. Consequently, enormous labor and time consumption are involved, in particular when a batch of different syntheses have to be dealt with. Besides, great difficulty has been encountered in attaining the desired purity and yield of the aimed or final product, not to speak of uniformity in the quality of the product.

Automated synthesis systems are known and disclosed in, for example, European Patent Publication No. 156588, U.S. Patent Specification No. 4598049 and an article by R.J. Uhlig published in Automatisierungstechnische Praxis, Vol.29 No.1, pp.17 to 23, (1987) and entitled "Erstellen von Ablaufsteuerungen Für Chargenprozesse mit wechselnden Rezepturen". Such systems generally comprise synthesis processing apparatus coupled to a computer which generates and supplies control information to the processing apparatus, the synthesis reaction being conducted in accordance with that control information.

In the light of the state of the art, the inventors of the present application have precedently developed an automated compound synthesizing system (See EP-A-0 332 452). Fig. 6 of the accompanying drawings shows a basic structure of the automated synthesis system, which will briefly be described below for having a better understanding of the present invention.

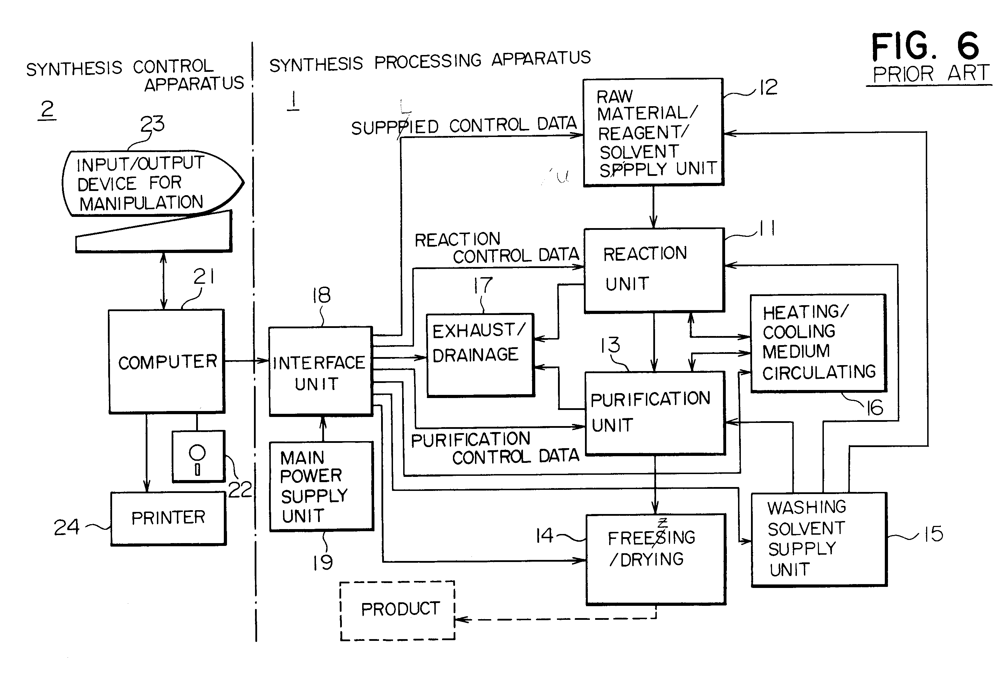

Referring to Fig. 6, the automated synthesis system illustrated is composed of a synthesis processing apparatus 1 and a synthesis control apparatus 2, wherein the synthesis processing apparatus 1 is so arranged as to perform a series of process steps required for synthesizing an aimed product from the raw material (starting) compounds, while the synthesis control apparatus 2 serves to prepare the control information for controlling the operations of the synthesis processing apparatus 1 and at the same time supervise the states prevailing within the synthesis processing apparatus 1 for thereby reflecting the detected states onto the control.

The synthesis processing apparatus 1 comprises a reaction unit 11 for carrying out a synthesis reaction process, a raw material reagent/solvent supply unit 12 for supplying raw or starting materials, a reagent and a solvent to the reaction unit 11, a purification unit 13 for purifying a product resulting from the synthesis reaction process performed by the reaction unit 11, a freezing/drying unit 14 for lyophilizing the product purified by the purification unit 11, a washing solvent supply unit 15 for supplying a solvent for washing flow lines of the reaction unit 11 and the raw material/reagent/solvent supply unit 12, as occasion requires, a heating/cooling medium circulating unit 16 for heating or cooling the reaction unit 11 and the purification unit 13, an exhaust/drainage unit 17 for exhausting and draining the reaction unit 11 and the purification unit 13, an interface unit 18, and an electric power supply source unit 19.

On the other hand, the synthesis control apparatus 2 comprises a computer or central processing unit (CPU) 21 for generating the control information for controlling sequentially the abovementioned individual units of the synthesis processing apparatus 1 in accordance with predetermined procedure and sequence, fetching various state signals detected by sensors installed at the individual units of the synthesis processing apparatus 1 and executing a processing for reflecting the detected states onto the control, a memory equipment 22 connected to the CPU 21 for storing therein control programs, data and others, an operator input/output apparatus 23 including a keyboard and a cathode ray tube (CRT) display, and a hard copy printer 24.

The efficiency at which the aimed product is synthesized within the reaction unit 11 of the synthesis processing apparatus 1, i.e. the ratio of the amount of the product to the time required for the synthesis depends on the amount of the reagent as added and the rate of the addition, because the raw materials and the intermediate products are in the equilibrium state. In the automated synthesis system described above, however, the control information concerning the amount of additon of the reagent required for the control of the synthesis reaction has to be previously prepared logically through manual procedure and loaded in the

synthesis control apparatus 2 in the form of the control program and the control data. Further, the control information must be prepared separately for each of the formulae of chemical reactions involved in the synthesis, i.e. for each of different combinations of the raw material compounds, reagents and the aimed products.

As will be seen from the foregoing, the automated synthesis system described above also suffers from problems. First, the control information for controlling the synthesis reaction has to be created for each of the chemical reactions for synthesis. Further, in order to prepare such control information for the optimum reaction conditions which allows the synthesis reaction to take place at the maximum efficiency, retrieval of a data base including an accumulation of data obtained through lots of experiences is required, which means that the preparation of the control information is attended with a significant time consumption and a great burden to the operator. Under the circumstances, it has been a common practice to prepare the control information rather intuitively by relying on the empirically acquired knowledge.

It is therefore an object of the present invention to provide an automated compound synthesizing method which can avoid the shortcomings of the prior techniques mentioned above and which makes it possible to prepare automatically the control information capable of realizing the optimum conditions for a given chemical reaction for thereby allowing the synthesis reaction process to be automatically performed in accordance with the control information.

It is another object of the present invention to provide an automated synthesis system for carrying out the method mentioned above.

A further object of the present invention is to provide an automated synthesis system which is adapted to produce an aimed product by adding a reagent to a reaction phase including raw material compounds and intermediates in the equilibrium state to thereby cause the reagent to react with the intermediate, and which system controls the volume of the reagent to be added as well as the rate of addition with the aid of a computer for thereby producing the aimed product of high purity with an improved yield.

It is still another object of the present invention to provide an automated synthesis system of versatile nature which can automatically perform a wide variety of synthesis reactions.

The present invention starts from the recognition that physical relations which can he defined by predetermined equations exist among a reaction rate constant ($k_1$) and an equilibrium constant ($K = k_1/k_{-1}$) of a given chemical reaction formula

$$A + B \underset{k_{-1}}{\overset{k_1}{\rightleftarrows}} M \text{ (intermediate)} \xrightarrow[R]{} P \text{ (final product)},$$

the concentration of a reagent (R), other synthesis conditions such as the initial concentration of a raw material mixture (A + B), a volume thereof and others, and a time for addition of the reagent (R) and a volume thereof for the optimum conditions for reaction, and the invention proposes to determine arithmetically the time for addition of the reagent and the volume thereof to be added for thereby preparing the control information required for realizing the optimum synthesis conditions by taking into account the addition time and the added volume of the reagent as determined.

In view of the above and other objects which will be more apparent as the description proceeds, there is proposed according to one aspect of the present invention an automated synthesis apparatus for producing a given product comprising:

(i) a synthesis processing apparatus (1) for performing a series of synthesis processing steps including: a reaction unit for carrying out a synthesis reaction step, a supply unit for supplying a raw material mixture, a reagent and a solvent to the reaction unit and a purification unit for purifying and extracting the product resulting from the synthesis reaction step,

(ii) synthesis control apparatus (2) for controlling the synthesis processing apparatus so that said reagent is added during the synthesis reaction step to said raw material mixture in an equilibrium phase wherein the starting components of said raw material mixture are in equilibrium with an intermediate product thereof, to thereby cause said reagent to undergo reaction with said intermediate product to produce the desired product, and

characterized in that the synthesis control apparatus comprises a computer which is programmed so that said reagent is successively added by the supply unit to the reaction unit at discrete time points ($t_0$, $t_i$) in amounts ($V_i$) determined by the following expressions (I), (II) and (III) respectively:

$$\text{(I)}\quad t_0 = \frac{\sqrt{K}}{2Ak_1} \ln \frac{1}{1+\sqrt{K}} \left[ \frac{1+\alpha}{1-\alpha} + \sqrt{K} \right]$$

$$\text{(II)}\quad t_i = \frac{\sqrt{K}}{2Ak_1} \left[ \frac{1+\sqrt{K}}{1+(1-\alpha)\sqrt{K}} \right]^i \cdot \left[ 1 + \frac{\sum_{i=1}^{n} V_i}{V_0} \right] \cdot \ln \frac{1}{1+\sqrt{K}} \left[ \frac{1+\alpha}{1-\alpha} + \sqrt{K} \right]$$

$$\text{(III)}\quad V_i = \frac{\beta A V_0}{y} \left[ \frac{\alpha\sqrt{K}}{1+\sqrt{K}} \right] \left[ 1 - \frac{\alpha\sqrt{K}}{1+\sqrt{K}} \right]^{i-1}$$

where

- $t_0$ represents a time duration of the reaction taken before said reagent is initially added,
- $t_i$ represents a series of discrete time points at which said reagent is added after lapse of $t_0$,
- $V_0$ represents the amount of said raw material mixture at the start of the reaction,
- $V_i$ represents the amount of said reagent added at said discrete time points $t_i$ respectively,
- $k_1$ represents a reaction rate constant specific to the reaction,
- $K$ represents an equilibrium constant specific to the reaction,
- $A$ represents the initial concentration of said raw material mixture,
- $\alpha$ represents the ratio of concentration of said intermediate product to a theoretical equilibrium concentration thereof,
- $\beta$ represents the stoichiometrical ratio between said reagent and said intermediate product, and
- $y$ represents the concentration of said reagent.

According to another aspect of the present invention, there is provided an automated synthesis system for producing a given product comprising:

(i) a synthesis processing apparatus for performing a series of synthesis processing steps including: supplying a raw material mixture, a reagent and a solvent; a synthesis reaction step; a purification step, and a product extraction step, in which said reagent is added during the synthesis reaction step to said raw material mixture in an equilibrium phase wherein the starting components of said raw material mixture are in equilibrium with an intermediate product thereof, to thereby cause said reagent to undergo reaction with said intermediate product to produce the desired product, and

(ii) synthesis control apparatus for generating control information required for controlling said synthesis processing steps,

characterized in that the synthesis control apparatus comprises a computer which is programmed so that said reagent is successively added at discrete time points ($t_0$, $t_i$) in amounts ($V_i$) determined by the expressions (I), (II) and (III) described previously.

In a preferred embodiment of the present invention, it is taught that when the reaction rate constant and the equilibrium constant are unknown in a given chemical reaction formula, they are calculated from a substituent constant and a reaction constant, whereby the control information required for the synthesis reaction is arithmetically determined by making use of the calculated reaction rate constant and the calculated equilibrium constant. In the case of the reaction of keto acid with amino acid, by way of example, expressions for calculations may be such as mentioned below.

$$K = 0.47 \exp(1.414 \times Es)$$
$$k_1 = 9.57 \exp(6.0 \times Es)$$

where Es represents the substituent constant.

The above and other objects as well as advantageous features and effects of the present invention will be more apparent upon consideration of the following description of the preferred and exemplary embodiments thereof taken, by way of example only, in conjunction with the accompanying drawings, in which:

Fig. 1 is a schematic block diagram for illustrating the principle underlying the present invention;

Fig. 2 is a functional block diagram showing a general arrangement of an automated compound synthesizing system according to an exemplary embodiment of the present invention;

Fig. 3 is a sequence chart or table showing, by way of example only, timing relations among process steps in an automated compound synthesis, detections of status quantities prevailing in the synthesis process and control procedure steps;

Fig. 4 is a flow chart showing schematically a basic structure of a control program according to an embodiment of the invention; and

Figs. 5(A) to 5(E) are flow charts illustrating routines incorporated in the control program shown in Fig. 4, in which:

Fig. 5(A) is a flow chart of a main input routine;

Fig. 5(B) is a flow chart of a reaction condition parameter setting routine;

Fig. 5(C) is a flow chart of a reaction control information generating routine;

Fig. 5(D) is a flow chart of a reaction product purification and isolation condition generating routine;

Fig. 5(E) is a flow chart of a main control routine; and

Fig. 6 is a view showing a structure of an automated synthesis apparatus according to the precedent proposal.

Before entering into detailed description of the exemplary embodiments of the present invention, the principle underlying the invention will first be elucidated by reference to Fig. 1.

In Fig. 1, a reference numeral 1 denotes a synthesis processing apparatus for performing a series of synthesis process steps such as charging of raw materials, a reagent and a solvent, reaction for the synthesis, purification and fractional extraction of the product. A reference numeral 2 denotes a synthesis control apparatus constituted by a computer for automatically preparing and supplying the control information required for the synthesis processing apparatus 1 to execute the series of synthesis process steps. The addition time of the reagent and the addition volume among others are arithmetically determined so that the optimum conditions for the intended synthesis reaction can be realized. A reference numeral 31 denotes a physical constant data input part for inputting constant data such as concentration data of the raw material compounds and the reagent which participate in the reaction for synthesis, a reaction-rate constant, an equilibrium constant, a substituent constant and others which are relevant to the synthesis reaction. A reference numeral 32 denotes a memory equipment for storing the abovementioned constant data inputted by way of the constant data input unit 31. A reference numeral 33 denotes a reaction-rate calculating part for determining unknown reaction-rate constant and unknown equilibrium constant from a physical constant such as the substituent constant, in case a given chemical reaction formula is lacking in the reaction rate constant and the equilibrium constant. A reference numeral 34 denotes an optimum reaction condition calculating part which reads out the constant data such as the initial concentration of the raw material mixture, the concentration of the reagent, the reaction rate constant, the equilibrium constant and others for a designated chemical reaction formula from the memory equipment 32 for thereby calculating the time for addition of the reagent and the volume thereof so that the optimal conditions for the synthesis reaction defined by the formula can be realized, wherein the results of the calculation are supplied to the synthesis processing apparatus 1 in the form of the control information.

In the operation of the conceptual synthesis system of the present invention shown in Fig. 1, the synthesis control apparatus 2 receives as the parameter information indicating chemistry characteristics of the synthesis reaction to be controlled, the reaction rate constant $k_1$, the equilibrium constant K ($= k_1/k_{-1}$) or the reaction constant and the substituent constant inputted through the constant data input part 31 and stores the parameter information in the memory equipment 32. The memory equipment 32 stores therein the constant data in correspondance relation with ID (e.g. identification symbol) attached to each of the chemical reaction formulae so that these constant data can readily be read out in an arbitrary manner. The reaction rate calculating part 33 serves to supplement the reaction rate constant $k_1$ and the equilibrium constant K for a chemical reaction formula designated for the control, unless these constant data are available form the memory, by determining them on the basis of the reaction constant and the substituent constant. The optimum reaction condition calculating part 34 calculates the reaction rate constant $k_1$ and the equilibrium constant K as well as the initial concentration of the raw material mixture, the time $t_i$ for addition of the reagent and the volume $V_i$ of the reagent to be added for a chemical reaction formula designated for the processing.

The time $t_i$ (i = 1,2, ...) for addition of the reagent means a reaction time intervening between the sequential additions of the reagent, wherein $t_0$, for example, represents a reaction time duration up to a time point $t_1$ at which the reagent is first to be added, and so forth. Accordingly, the total reaction time T is given by the following expression:

$$T = t_0 + \sum_{i=1}^{n} t_i \qquad .....(1)$$

Further, the symbol $V_i$ represents the volume of the reagent to be added at each of the time points $t_i$. Accordingly, the total volume $V_t$ of the agent to be added can be expressed as follows:

$$V_t = \sum_{i=1}^{n} V_i \qquad .....(2)$$

In the above expressions (1) and (2) $t_0$, $t_1$ and $V_i$ are given, respectively, by the following ones:

$$t_0 = \frac{\sqrt{K}}{2Ak_1} \ln \frac{1}{1+\sqrt{K}} \left( \frac{1+\alpha}{1-\alpha} + \sqrt{K} \right) \qquad .....(3)$$

$$t_i = \frac{\sqrt{K}}{2Ak_1} \left( \frac{1+\sqrt{K}}{1+(1-\alpha)\sqrt{K}} \right)^{i} \times \left( 1 + \frac{\sum_{i=1}^{n} V_i}{V_0} \right) \ln \frac{1}{1+\sqrt{K}} \times \left( \frac{1+\alpha}{1-\alpha} + \sqrt{K} \right) \qquad .....(4)$$

$$V_i = \frac{\beta A V_0}{y} \left( \frac{\alpha \sqrt{K}}{1+\sqrt{K}} \right) \left( 1 - \frac{\alpha \sqrt{K}}{1+\sqrt{K}} \right)^{i-1} \qquad .....(5)$$

where the symbols used in the expressions (3) to (5) have the contents as follows:

- $k_1$ : reaction rate constant (in forward direction),
- K : equilibrium constant,
- A : initial concentration of raw material mixture,
- $\alpha$ : ratio of concentration of intermediates as produced to theoretical equilibrium concentration,
- $\beta$ : stoichiometrical ratio between the reagent and the intermediate, and
- y : concentration of the reagent.

Now, an exemplary embodiment of the present invention will be described in detail. Fig. 2 shows in a block diagram an arrangement of the automated synthesis system for performing a series of synthesis process steps including the supply of raw materials, reagents and solvents, the synthesis reaction, purification and fractional extraction of a product in an automated manner. In the following, individual

functional parts will be elucidated in the order of the reference numerals attached thereto for convenience of description. Parenthetically, interconnection of the various aprts will be readily understood from the figure.

Constant Data Input Part 41

Desired data such as the concentrations of raw materials and reagents, a reaction constant relevant to the synthesis reaction of concern, physical constants such as a substituent constant and others, purity of the reaction product, the minimum yield to be attained at the least are inputted by way of this data input part 41.

Sequence Table Input Part 42

A sequence table containing the control procedure for the whole synthesis process and a series of commands designating individual control conditions is inputted through this sequence table input part 42. Further, the names of raw materials, reagents and solvents are inputted in association with the identification numbers allocated to the respective reservoirs.

Memory Equipment 43

The memory equipment 43 is constituted by a RAM (random access memory) backed up by an auxiliary storage device such as a floppy disk device or the like and serves for storing the various input parameters such as the initial concentration of a raw material mixture, the concentration of reagent, the reaction constant, the substituent constant and others as well as the sequence table for making them available for utilization, as occasion requires. An example of the sequence table is shown in Fig. 3 in the form of a sequence/timing chart.

Sequence Controller 44

This sequence controller 44 executes the control procedure and the individual controls designated in the sequence table (Fig. 3) to thereby issue corresponding operation commands.

When entry of the raw material/reagent names corresponding to the identification number of the associated reservoir is absent in the sequence table input part 42, the relevant supply step is jumped over to execute a succeeding operation. Combination of the raw materials for reaction and the order therefor are fetched in the sequence table. In case entry of the concentration is absent, the relevant operation in the sequence table is skipped. Unless extraction of the solvent and adjustment of pH are required, a liquid transfer (or transportation) process is executed.

Selection of HPLC (high performance liquid chromatography), CPC (centrifugal partition chromatography) and the developing solvent is realized by issuing a corresponding valve switching instruction in accordance with the command. Volumetric measurement, concentration and extraction of the solvent and injection of the reactant mixture into the purification system are executed under control at succeeding sequence steps in response to signals outputted from a G-L (gas - liquid boundary detecting) sensor, a L-L (liquid - liquid interface detecting) sensor, a concentration sensor and others.

Raw Material/Reagent/Solvent Supply Part 45

In response to the signal issued from the sequence controller 44, the amount of a solution of the raw materials is measured with the aid of the signal from the G-L sensor while controlling the corresponding valve on/off operation, the measured solution being then introduced to a reaction flask.

Reaction/Concentration/Extraction Maneuvering Part 46

Operations for the reaction, the concentration and the extraction are activated in response to the signals from the sequence controller 44 and a reaction controller 49 (described hereinafter).

Reaction Speed Calculating Part 47

Upon input of the reaction rate constants ($k_1$) and the equilibrium constants ($K = k_1/k_{-1}$) for a product corresponding to several substituent constants in the following chemical reaction formula

$$A + B \underset{k_{-1}}{\overset{k_1}{\rightleftarrows}} M,$$

the physical constants such as the reaction constants and others are arithmetically determined to be stored in the memory equipment 43. On the basis of these physical constants stored in the memory equipment 43, the constants $k_1$ and K corresponding to a number of the substituent constants are calculated through reverse procedure to be subsequently stored in the memory equipment 43.

## Optimum Reaction Condition Calculating Part 48

Concentration of the reagent (R) for the reaction and the initial concentration and volume of the raw material mixture are read out together with the constants $k_1$ and K from the memory equipment 43, whereon the time for addition and the volume of the reagent (R) to be added in the undermentioned succeeding reaction phase are calculated.

$$M + R \rightarrow P$$

## Reaction Controller 49

This reaction controller 49 regulates the reagent addition rate by adjusting the opening degree of the corresponding valve by driving with a pulse-like current.

For the concentration and the extraction, the execution command is issued on the basis of the results of detection outputs of the concentration sensor and the L-L sensor. However, in the case of a reaction which does not require such execution command, the processing is jumped to a next sequence step.

## Heat/Cool/Vacuum Supply Part 50

A heating medium or a coolant is circulated through a jacket tube of the reaction flask for the heating or cooling thereof.

In response to a signal commanding the concentration or a signal commanding transfer of the solution, the associated valves are opened or closed with a vacuum pump being driven.

## Purification Part 51

The purification part includes the HPLC, CPC, concentrating means and a buffer solution adjusting system, wherein selection of the HPLC or CPC or operation of them in the serial connection is rendered possible.

## Raw Material/Product Identification Part 52

Peaks of the effluent components are detected with the aid of HPLC or CPC, wherein those components exhibiting the peaks having a same duration as the retention time of the raw materials are introduced to a non-reacted raw material wastage reservoir 53 (described hereinafter).

The peak measured for the product is utilized for arithmetically determining the purity and yield of the product by taking into consideration magnitude of the peak or the relation between the magnitude of the peak and the retention time in case another peak makes appearance in the vicinity of the former.

When the purity and the yield have exceeded the respective desired values, the product fraction of concern is introduced to a product isolation/fractionation part 54 (described hereinafter). On the other hand, when the purity is lower than the desired value, a signal commanding re-purification is issued to the purification part 51.

When the yield is lower than an expected value, the product fraction is introduced to the fractional extraction part and at the same time a re-synthesis operation start command is issued to the memory equipment 43.

Non-reacted Raw Material Waste Part 53

The raw material fraction as identified by the raw material/product identification part 52 and the washing solution for the associated flow lines are all introduced into a reservoir for wastage.

Product/Isolation/Fractionation Part 54

The product fractions are introduced into concentrate reservoirs provided for every products and lyophlized.

Purification/Isolation Condition Generating Part 55

On the basis of the retention time of the given raw materials, the purity and the minimum yield to be assured for the product and the result of the purification, the conditions for controlling the purification and isolation are determined to thereby generate appropriate control information.

Fig. 3 shows an example of the sequence table utilized in the apparatus according to the illustrated embodiment of the present invention.

In this sequence, it is assumed that reaction of solutions given by the general formula mentioned below is performed.

$$A + B + (C) \xrightarrow{D\ (\text{reagent})} X \qquad \text{at the 1st stage}$$

$$X \xrightarrow{F,\ G} Y \qquad \text{at the 2nd stage}$$

$$Y \xrightarrow{H,\ J} P \qquad \text{at the 3rd stage}$$

More specifically, a plurality of raw materials A and B or A, B and C are added with D for reaction to thereby produce an intermediate X (reaction at the first stage), being followed by processing of the intermediate by adding F and G (at the second stage), whereupon Y as derived is added with H and J for further reaction to thereby produce an end product P (at the third stage). The additives D, F, G, H and J may be reagent, catalyst or solvent. The product derived at each stage may be concentrated at a normal or reduced pressure, wherein the intermediate remaining within the flask may be caused to react with the reagent added thereto.

In Fig. 3, "TIME ($T_n$)" represents a timing for the control, and "STEP" means individual steps included in the synthesis reaction processing. Further, "MEASUREMENT/CONTROL" represents the content of measurement or control effected at each "STEP". Similarly "CALCULATION/DECISION" represents contents of the corresponding calculation/decision steps.

Fig. 4 shows a structure of the control program for the embodiment shown in Fig. 2. Referring to Fig. 4, a main input routine (I) is provided for inputting various data designating the conditions for the synthesis process and thus implements the functions of the constant data input part 41 and the sequence table input part 42 shown in Fig. 2. A reaction condition parameter setting routine (II) is provided for calculating and setting the reaction rate constant $k_1$ and the equilibrium constant K and others used as the reaction condition parameters for the intended synthesis reaction given by a formula and thus realizes the function of the reaction rate calculation part 47 shown in Fig. 2. A reaction control information generating routing (III) is provided for calculating the reagent addition time $t_i$ and the volume $V_i$ of the reagent to be added to thereby generate the control information for the addition of the reagent and thus realizes the function of the optimum reaction condition calculation part 48 shown in Fig. 2. A reaction product purification/isolation condition generating routine (IV) is provided for generating the control information for the purification and the isolation in dependence on the desired values of purity and yield of the product derived as the result of the synthesis reaction and thus realizes the function of the purification/isolation condition generating part 55 shown in Fig.

2. A main control routine (V) serves to control the synthesis processing apparatus on the basis of the control information established or generated through the routines (I) to (IV).

Next, flows of the individual routines (I) to (V) will be explained in more detail by reference to Figs. 5 (I) to (V).

Main Input Routine (I)

Fig. 5 (A) shows a flow of the main input routine (I) which includes steps (I-1) to (I-4), the contents of which are mentioned below.

At the step (I-1), the data input operation is executed while watching an input image. The input image is provided with prompting display regions for displaying various items prompting the input of the data required for performing the synthesis process and data input regions. In accordance with the input data items, there can be inputted various parameters such as, for example, names of raw material compounds, types of the reaction, names of the substituents, names of reagents, concentrations of the raw material and the reagent, a control table, the sequence table and others in the data input regions. However, it is not always necessary to input the corresponding data in response to all the input data items being displayed. The data input may be spared for some of the items. Further, it is also possible to make use of the data inputted previously and stored in a file to thereby select the appropriate data or alternatively to utilize default values instead of the data inputting mentioned above. The input image may be constituted by a plurality of areas such as main input image areas and auxiliary input image areas.

At the step (I-2), the step (I-1) mentioned above is repeated until the end of the data input operation has been detected. The data inputted are stored.

At the step (I-3), the input data are analyzed to check whether the reaction condition parameters required for the synthesis process control of concern have completely been inputted or not.

At the step (I-4), when it is found that some of the reaction condition parameters are absent, the reaction condition parameter setting routing (II) is called to request for supplementation of the absent parameters. On the other hand, when all the reaction condition parameters as required have been inputted, a reaction product purification/isolation condition generating routine (IV) is then activated.

Reaction Condition Parameter Setting Routine (II)

Fig. 5 (B) shows a flow of the reaction condition parameter setting routine including steps (II-1) to (II-6), the contents of which are what follows.

At the step (II-1), a processing required for the supplementation of the reaction condition parameter as mentioned above is executed. At first, the reaction formula of concern is identified. When the required reaction constant is available from the data accumulated until then for the same type reaction formula as the identified one, the step (II-2) is executed. On the other hand, the reaction constant for the same type reaction formula is unavailable from the previously accumulated data, learning (inference) has to be made. To this end, the step (II-5) for determining the reaction constant of concern is executed.

At the step (II-2), the stored substituent constant Es is read out.

At the step (II-3), the substituent constant Es is utilized for calculating the reaction condition parameters, i.e. the equilibrium constant K and the reaction rate constant $k_1$. Examples of the formulae for the calculation are given below:

$$K = 0.47 \exp (0.614 Es / 0.4343) \qquad (6)$$

$$k_1 = 9.57 \exp (2.607 Es / 0.4343) \qquad (7)$$

In the above expressions (6) and (7), the numerical values represent the reaction constants.

At the step (II-4), the inputted or calculated parameters for the reaction condition are set. The calculated reaction condition parameters are also registered as the learned data for storage in the file for the purpose of making it possible to utilize them in the future.

At the step (II-5), the equilibrium constants K, the reaction rate constant $k_1$ and the substituent constants Es for the reaction formula of concern are read out from the file storing the data for the known reaction formulae, for thereby determining the reaction constants for the reaction formula of concern.

At the step (II-6), the reaction constants and the substituent constants for the reaction formula of concern are calculated on the basis of distributions of K, $k_1$ and Es for the known reaction formula as read out by resorting to the method of least squares. The results of the calculation are transferred to the step (II-3).

Reaction Control Information Generating Routine (III)

Fig. 5 (C) shows a flow of a reaction control information generating routine including steps (III-1) to (III-9), the contents of which are described below.

At the step (III-1), the contents of control stored in the sequence table created through the input procedure effected by the primary input routine (I) are analyzed for the sequential synthesis process steps.

At the step (III-2), decision is made as to whether the reaction control is required at the process step to be next executed in the sequence table. If it is required, the step (III-3) is executed. Otherwise, the step (III-8) is executed.

At the step (III-3), the reaction condition parameters K and $k_1$ as set are read out.

At the step (III-4), the reagent addition time $t_i$ iscalculated according to the expression (4) mentioned hereinbefore.

At the step (III-5), the volume $V_i$ of the reagent to be added is calculated in accordance with the expression (5) mentioned hereinbefore.

At the step (III-6), the opening/closing of the valve for addition of the reagent is controlled under pulse drive on the basis of $t_i$ and $V_i$ calculated.

At the step (III-7), the steps (III-4) to (III-6) are executed until the addition of the reagent has been completed.

At the step (III-8), when it is decided at the step (III-2) that the reaction control is unnecessary, other synthesis process controls such as opening/closing (ON/OFF) of valves and start/stop of pumps as commanded is performed.

At the step (III-9), signal output from the G-L sensor is fetched for monitoring the status being currently controlled.

Reaction Product Purification/Isolation Condition Generating Routine (IV)

Fig. 5 (D) shows a flow of the reaction product purification/isolation condition generating routine including steps (IV-1) to (IV-13), the contents of which are described below.

At the step (IV-1), the retention time of the raw material compounds, the purity of the reaction product and the minimum yield to be assured set at the respective derived values are read out.

At the step (IV-2), decision is made as to whether the purification process is to be altered or not. If it is unnecessary, the step (IV-3) is executed. Otherwise, the step (IV-4) is executed.

At the step (IV-3), a mixture resulting from the reaction is injected.

At the step (IV-4), data of the HPLC column, developing solvent and the CPC developing solvent are inputted.

At the step (IV-5), the flow lines for the injection into the purification system are changed.

At the step (IV-6), signals from the detectors of the purification system are fetched.

At the step (IV-7), the base line (reference point) is measured.

At the step (IV-8), slope of the peak, the maximum peak value, the peak area and the retention time are measured, respectively.

At the step (IV-9), decision is made as to the possibility of isolated extraction of the product or wastage of the raw materials. In case the isolated extraction is to be performed, the step (IV-10) is executed. Otherwise, the step (IV-6) is resumed.

At the step (IV-10), the purity and the yield of the product are calculated.

At the step (IV-11), through comparison with the desired purity, decision is made as to whether re-purification is necessary or not. In case the re-purification is necessary, the step (IV-12) is executed. Otherwise, the step (IV-13) is executed.

At the step (IV-12), through comparison with the desired yield, decision is made as to whether or not the re-synthesis is required. If it is necessary, the main control routine (V) is executed. Otherwise, the processing comes to an end.

Main Control Routine (V)

Fig. 5 (E) shows a flow of main control routine including steps (V-1) to (V-15), the contents of which are described below. In this conjunction, it is assumed that the names of the raw materials, reagents and solvents, the reservoir identification numbers, the necessity or non-necessity of the extraction process,

command for the concentration process, and the necessity or non-necessity of the pH-adjustment of the solution as well as the pH-value have been inputted already through the main input routine (I).

At the step (V-1), initialization of the sequence is performed and a proper sequence table (e.g. one shown in Fig. 3) is set.

At the step (V-2), various parameters inputted through the routine (I) are analyzed.

At the step (V-3), the first process step in the sequence table is read out for commanding a raw material mixing (supplying) sequence.

At the step (V-4), information commanding the valve opening and the pump start is outputted.

At the step (V-5), the signal outputted from the G-L sensor is fetched to measure the amount of the injected solution.

At the step (V-6), information commanding the valve close and the pump stop is outputted.

At the step (V-7), decision is made as to whether the raw material mixing sequence has been completed or not.

At the step (V-8), the next process step in the sequence table is read out for indicating the reaction process.

At the step (V-9), decision is made as to the necessity or non-necessity of the reaction control. When the reaction control is necessary, the reaction control information generating routine (III) is activated. When it is non-necessity the step (V-10) is executed.

At the step (V-10), reaction process time sequence is altered by the input operation.

At the step (V-11), the signals outputted from the concentration sensor, G-L sensor and the L-L sensor are fetched to perform the pH-measurement and decision as to the propriety thereof.

At the step (V-12), the result of the decision is checked to output the information commanding the opening/closing of valves, start/stop of pumps and selection of the cooling/heating medium.

At the step (V-13), decision is made as to the completion of the reaction process sequence. If it is not yet completed, the step (V-8) is resumed. When completed, the reaction product purification/isolation condition generating routine (IV) is activated.

At the step (V-14), the information commanding the drive or stop of the valves, pumps and the motors for the purification/isolation is outputted.

At the step (V-15), it is decided whether or not all the processing operations have been completed. If so, the synthesis process is finished. If not completed, the step (V-1) is regained.

As will be appreciated from the foregoing description, according to the present invention, the control information for performing a given synthesis reaction is automatically generated for the optimum reaction conditions simply by inputting the predetermined constant data for the given synthesis reaction at the start thereof, whereby the synthesis reaction can be executed automatically. Thus, there can be attained a high run efficiency while mitigating significantly the burden on the operator, which is very advantageous particularly when a wide variety of synthesis reaction processes have to be frequently carried out.

## Claims

**1.** An automated synthesis apparatus for producing a given product comprising:

(i) a synthesis processing apparatus (1) for performing a series of synthesis processing steps including: a reaction unit for carrying out a synthesis reaction step, a supply unit for supplying a raw material mixture, a reagent and a solvent to the reaction unit and a purification unit for purifying and extracting the product resulting from the synthesis reaction step,

(ii) synthesis control apparatus (2) for controlling the synthesis processing apparatus so that said reagent is added during the synthesis reaction step to said raw material mixture in an equilibrium phase wherein the starting components of said raw material mixture are in equilibrium with an intermediate product thereof, to thereby cause said reagent to undergo reaction with said intermediate product to produce the desired product, and

characterized in that the synthesis control apparatus comprises a computer which is programmed so that said reagent is successively added by the supply unit to the reaction unit at discrete time points ($t_0$, $t_i$) in amounts ($V_i$) determined by the following expressions (I), (II) and (III) respectively:

$$\text{(I)}\quad t_0 = \frac{\sqrt{K}}{2Ak_1} \ln \frac{1}{1+\sqrt{K}} \left[ \frac{1+\alpha}{1-\alpha} + \sqrt{K} \right]$$

$$\text{(II)}\quad t_i = \frac{\sqrt{K}}{2Ak_1} \left[ \frac{1+\sqrt{K}}{1+(1-\alpha)\sqrt{K}} \right]^i \cdot$$

$$\left[ 1 + \frac{\sum_{i=1}^{n} V_i}{V_0} \right] \cdot \ln \frac{1}{1+\sqrt{K}} \left[ \frac{1+\alpha}{1-\alpha} + \sqrt{K} \right]$$

$$\text{(III)}\quad V_i = \frac{\beta\ A\ V_0}{y} \left[ \frac{\alpha\sqrt{K}}{1+\sqrt{K}} \right] \left[ 1 - \frac{\alpha\sqrt{K}}{1+\sqrt{K}} \right]^{i-1}$$

where

- $t_0$ represents a time duration of the reaction taken before said reagent is initially added,
- $t_i$ represents a series of discrete time points at which said reagent is added after lapse of $t_0$,
- $V_0$ represents the amount of said raw material mixture at the start of the reaction,
- $V_i$ represents the amount of said reagent added at said discrete time points $t_i$ respectively,
- $k_1$ represents a reaction rate constant specific to the reaction,
- $K$ represents an equilibrium constant specific to the reaction,
- $A$ represents the initial concentration of said raw material mixture,
- $\alpha$ represents the ratio of concentration of said intermediate product to a theoretical equilibrium concentration thereof,
- $\beta$ represents the stoichiometrical ratio between said reagent and said intermediate product, and
- $y$ represents the concentration of said reagent.

**2.** An automated synthesis system as claimed in Claim 1, characterized in that said reaction rate constant ($k_1$) and said equilibrium constant (K) are determined on the basis of a substituent constant ($E_s$) in accordance with:

$k_1 = A \exp (B . E_s)$
$K = C \exp (D . E_s)$

where A, B, C and D represent constants specific to the reaction.

**3.** An automated synthesis system as claimed in Claim 1 or Claim 2, characterized in that the data for said time points ($t_0$, $t_i$) and said amounts ($V_i$) calculated in accordance with said expressions (I), (II) and (III) is stored together with identification information for the reaction in a memory of said computer.

**4.** An automated compound synthesizing system as claimed in any one of Claims 1 to 3, characterized in that different reagents are added at discrete time points ($t_i$).

**5.** An automated compound synthesizing method for producing a given product through a series of synthesis processing steps including: supplying a raw material mixture, a reagent and a solvent; a synthesis reaction step; a purification step, and a product extraction step,

in which said reagent is added during the synthesis reaction step to said raw material mixture in an equilibrium phase wherein the starting components of said raw material mixture are in equilibrium with an intermediate product thereof, to thereby cause said reagent to undergo reaction with said intermediate product to produce the desired product,

characterized in that the addition of said reagent is controlled by a computer which is programmed so that said reagent is successively added at discrete time points ($t_0$, $t_i$) in amounts ($V_i$) determined by the following expressions (I), (II) and (III) respectively:

$$\text{(I)}\quad t_0 = \frac{\sqrt{K}}{2Ak_1} \ln \frac{1}{1+\sqrt{K}} \left[ \frac{1+\alpha}{1-\alpha} + \sqrt{K} \right]$$

$$\text{(II)}\quad t_i = \frac{\sqrt{K}}{2Ak_1} \left[ \frac{1+\sqrt{K}}{1+(1-\alpha)\sqrt{K}} \right]^i \cdot \left[ 1 + \frac{\sum_{i=1}^{n} V_i}{V_0} \right] \cdot \ln \frac{1}{1+\sqrt{K}} \left[ \frac{1+\alpha}{1-\alpha} + \sqrt{K} \right]$$

$$\text{(III)}\quad V_i = \frac{\beta A V_0}{y} \left[ \frac{\alpha\sqrt{K}}{1+\sqrt{K}} \right] \left[ 1 - \frac{\alpha\sqrt{K}}{1+\sqrt{K}} \right]^{i-1}$$

where

- $t_0$ represents a time duration of the reaction taken before said reagent is initially added,
- $t_i$ represents a series of discrete time points at which said reagent is added after lapse of $t_0$,
- $V_0$ represents the amount of said raw material mixture at the start of the reaction,
- $V_i$ represents the amount of said reagent added at said discrete time points $t_i$ respectively,
- $k_1$ represents a reaction rate constant specific to the reaction,
- $K$ represents an equilibrium constant specific to the reaction,
- $A$ represents the initial concentration of said raw material mixture,
- $\alpha$ represents the ratio of concentration of said intermediate product to a theoretical equilibrium concentration thereof,
- $\beta$ represents the stoichiometrical ratio between said reagent and said intermediate product, and
- $y$ represents the concentration of said reagent.

**6.** An automated compound synthesizing method as claimed in Claim 5 characterized in that said reaction rate constant ($k_1$) and said equilibrium constant ($K$) are determined on the basis of a substituent constant ($E_s$) in accordance with:

$$k_1 = A \exp (B \cdot E_s)$$
$$K = C \exp (D \cdot E_s)$$

where A, B, C and D represent constants specific to the reaction.

**7.** An automated compound synthesizing method as claimed in Claim 5 or Claim 6, characterized in that the data for said time points ($t_0$, $t_i$) and said amounts ($V_i$) calculated in accordance with said expressions (I), (II) and (III) are stored together with identification information for the reaction in a memory of said computer

**8.** An automated compound synthesizing method as claimed in any one of Claims 5 to 7 characterized in that different reagents are added at discrete time points ($t_i$).

**Patentansprüche**

**1.** Automatisierte Synthesevorrichtung zum Erzeugen eines gegebenen Produktes, mit:

(i) einer Synthese-Bearbeitungsvorrichtung (1) zum Ausführen einer Reihe von Synthese-Bearbeitungsschritten einschließlich: einer Reaktionseinheit zum Ausführen eines Synthese-Reaktionsschrittes, einer Zuführeinheit zum Zuführen einer Rohmaterialmischung, eines Reagens und eines Lösungsmittels zur Reaktionseinheit und einer Reinigungseinheit zum Reinigen und Extrahieren des aus dem Synthese-Reaktionsschritt resultierenden Produktes,

(ii) einer Synthese-Steuervorrichtung (2) zum Steuern der Synthese-Bearbeitungsvorrichtung, so daß das Reagens während des Synthese-Reaktionsschrittes der Rohmaterialmischung in einer Gleichgewichtsphase zugesetzt wird, in der die Ausgangskomponenten der Rohmaterialmischung mit einem Zwischenprodukt davon im Gleichgewicht sind, um dadurch das Reagens zur Reaktion mit dem Zwischenprodukt zu bringen und das gewünschte Produkt zu erzeugen,

dadurch gekennzeichnet, daß die Synthese-Steuervorrichtung einen Rechner aufweist, der so programmiert ist, daß das Reagens stufenweise von der Zuführeinheit zur Reaktioneinheit an diskreten Zeitpunkten ($t_o$, $t_i$) in Mengen ($V_i$) zugesetzt wird, die durch die folgenden Gleichungen (I), (II) bzw. (III) bestimmt werden:

$$\text{(I)} \quad t_0 = \frac{\sqrt{K}}{2Ak_1} \ln \frac{1}{1+\sqrt{K}} \left[\frac{1+\alpha}{1-\alpha} + \sqrt{K}\right]$$

$$\text{(II)} \quad t_i = \frac{\sqrt{K}}{2Ak_1} \left[\frac{1+\sqrt{K}}{1+(1-\alpha)\sqrt{K}}\right]^i \cdot \left[1 + \frac{\sum_{i=1}^{n} V_i}{V_0}\right] \cdot \ln \frac{1}{1+\sqrt{K}} \left[\frac{1+\alpha}{1-\alpha} + \sqrt{K}\right]$$

$$\text{(III)} \quad V_i = \frac{\beta A V_0}{\gamma} \left[\frac{\alpha\sqrt{K}}{1+\sqrt{K}}\right]\left[1 - \frac{\alpha\sqrt{K}}{1+\sqrt{K}}\right]^{i-1}$$

wobei

- $t_o$ eine Zeitdauer der Reaktion, bevor das Reagens anfangs zugesetzt wird, darstellt,
- $t_i$ eine Reihe von diskreten Zeitpunkten darstellt, an denen das Reagens nach Ablauf von $t_o$ zugesetzt wird,
- $V_o$ die Menge der Rohmaterialmischung bei Beginn der Reaktion darstellt,
- $V_i$ die Menge des an den diskreten Zeitpunkten $t_i$ zugesetzten Reagens darstellt,
- $k_1$ die für die Reaktion spezifische Reaktionsrate-Konstante darstellt,
- K die für die Reaktion spezifische Gleichgewichtskonstante darstellt,

A die Anfangskonzentration der Rohmaterialmischung darstellt,
$\alpha$ das Konzentrationsverhältnis des Zwischenproduktes zu einer theoretischen Gleichgewichtskonzentration davon darstellt,
$\beta$ das stöchiometrische Verhältnis zwischen dem Reagens und dem Zwischenprodukt darstellt, und
y die Konzentration des Reagens darstellt.

**2.** Automatisiertes Synthesesystem nach Anspruch 1, dadurch gekennzeichnet, daß die Reaktionsrate-Konstante ($k_1$) und die Gleichgewichtskonstante (K) auf Basis einer Substituentenkonstante ($E_s$) gemäß

$k_1$ = A exp (B x Es),
K = C exp (D x Es)

bestimmt werden, wobei A, B, C und D für die Reaktion spezifische Konstanten darstellen.

**3.** Automatisiertes Synthesesystem nach Anspruch 1 oder 2,
dadurch gekennzeichnet, daß die Daten für die gemäß den Gleichungen (I), (II) und (III) berechneten Zeitpunkte ($t_o$, $t_i$) und Mengen ($V_i$) zusammen mit Identifikationsinformationen für die Reaktion in einem Speicher des Rechners abgespeichert werden.

**4.** Automatisiertes Synthesesystem nach einem der Ansprüche 1 bis 3,
dadurch gekennzeichnet, daß verschiedene Reagenzien an diskreten Zeitpunkten ($t_i$) zugesetzt werden.

**5.** Automatisiertes Verbindungs-Syntheseverfahren zur Herstellung eines gegebenen Produktes durch eine Reihe von Synthese-Bearbeitungsschritten einschließlich: Zuführen einer Rohmaterialmischung, eines Reagens und eines Lösungsmittels; einem Synthese-Reaktionsschritt;
einem Produkt-Reinigungsschritt und einem Produkt-Extraktionsschritt, bei dem das Reagens während des Synthese-Reaktionsschrittes zur Rohmaterialmischung in einer Gleichgewichtsphase zugesetzt wird, in der die Ausgangskomponenten der Rohmaterialmischung im Gleichgewicht mit einem Zwischenprodukt davon sind, um dadurch das Reagens zur Reaktion mit dem Zwischenprodukt zu bringen und das gewünschte Produkt zu erzeugen,
dadurch gekennzeichnet, daß das Zusetzen des Reagens durch einen Rechner gesteuert wird, der so programmiert ist, daß das Reagens stufenweise an diskreten Zeitpunkten ($t_o$, $t_i$) in Mengen ($V_i$) zugesetzt wird, die durch die folgenden Gleichungen (I), (II) bzw. (III) bestimmt werden:

$$\text{(I)} \quad t_0 = \frac{\sqrt{K}}{2Ak_1} \ln \frac{1}{1+\sqrt{K}} \left[ \frac{1+\alpha}{1-\alpha} + \sqrt{K} \right]$$

$$\text{(II)} \quad t_i = \frac{\sqrt{K}}{2Ak_1} \left[ \frac{1+\sqrt{K}}{1+(1-\alpha)\sqrt{K}} \right]^i \cdot \left[ 1 + \frac{\sum_{i=1}^{n} V_i}{V_0} \right] \cdot \ln \frac{1}{1+\sqrt{K}} \left[ \frac{1+\alpha}{1-\alpha} + \sqrt{K} \right]$$

$$\text{(III)} \quad V_i = \frac{\beta A V_0}{y} \left[ \frac{\alpha\sqrt{K}}{1+\sqrt{K}} \right] \left[ 1 - \frac{\alpha\sqrt{K}}{1+\sqrt{K}} \right]^{i-1}$$

wobei

- to — eine Zeitdauer der Reaktion, bevor das Reagens anfangs zugesetzt wird, darstellt,
- $t_i$ — eine Reihe von diskreten Zeitpunkten darstellt, an denen das Reagens nach Ablauf von $t_o$ zugesetzt wird,
- $V_o$ — die Menge der Rohmaterialmischung bei Beginn der Reaktion darstellt,
- $V_i$ — die Menge des an den diskreten Zeitpunkten $t_i$ zugesetzten Reagens darstellt,
- $k_1$ — die für die Reaktion spezifische Reaktionsrate-Konstante darstellt,
- K — die für die Reaktion spezifische Gleichgewichtskonstante darstellt,
- A — die Anfangskonzentration der Rohmaterialmischung darstellt,
- x — das Konzentrationsverhältnis des Zwischenproduktes zu einer theoretischen Gleichgewichtskonzentration davon darstellt,
- x — das stöchiometrische Verhältnis zwischen dem Reagens und dem Zwischenprodukt darstellt, und
- y — die Konzentration des Reagens darstellt.

**6.** Automatisiertes Verbindungs - Syntheseverfahren nach Anspruch 5,
dadurch gekennzeichnet, daß die Reaktionsrate-Konstante ($k_1$) und die Gleichgewichtskonstante (K) auf Basis einer Substituentenkonstante ($E_s$) gemäß

$k_1$ = A exp (B x Es),
K = C exp (D x Es)

bestimmt werden, wobei A, B, C und D für die Reaktion spezifische Konstanten darstellen.

**7.** Automatisiertes Verbindungs - Syntheseverfahren nach Anspruch 5 oder 6,
dadurch gekennzeichnet, daß die Daten für die gemäß den Gleichungen (I), (II) und (III) berechneten Zeitpunkte ($t_o$, $t_i$) und Mengen ($V_i$) zusammen mit Identifikationsinformationen für die Reaktion in einem Speicher des Rechners abgespeichert werden.

**8.** Automatisiertes Verbindungs - Syntheseverfahren nach einem der Ansprüche 5 bis 7,
dadurch gekennzeichnet, daß verschiedene Reagenzien an diskreten Zeitpunkten ($t_i$) zugesetzt werden.

## Revendications

**1.** Appareil de synthèse automatisé pour la production d'un produit donné comportant :

(i) un appareil de traitement de synthèse destiné à effectuer une série d'étapes de traitement de synthèse comportant : une unité de réaction destinée à effectuer une étape de réaction de synthèse, une unité d'alimentation destinée à fournir un mélange de matières premières, un réactif et un solvant à l'unité de réaction et une unité de purification destinée à purifier et à extraire le produit résultant de l'étape de réaction de synthèse,

(ii) un appareil de commande de la synthèse (2) destiné à commander l'appareil de traitement de synthèse afin que ledit réactif soit ajouté pendant l'étape de réaction de synthèse audit mélange de matières premières dans une phase d'équilibre dans laquelle les composants de départ dudit mélange de matières premières sont à l'équilibre avec un produit intermédiaire de celles-ci, afin de faire subir, audit réactif,une réaction avec ledit produit intermédiaire pour produire le produit souhaité, et

caractérisé en ce que le dispositif de commande de la synthèse comporte un ordinateur qui est programmé de telle sorte que ledit réactif soit successivement ajouté par l'unité d'alimentation a l'unité de réaction à des moments discrets ($t_0$, $t_i$) dans des quantités ($v_i$) déterminées par les expressions (I), (II) et (III) suivantes respectivement :

$$\text{(I)} \quad t_0 = \frac{\sqrt{K}}{2Ak_1} \ln \frac{1}{1+\sqrt{K}} \left[ \frac{1+\alpha}{1-\alpha} + \sqrt{K} \right]$$

$$\text{(II)} \quad t_i = \frac{\sqrt{K}}{2Ak_1} \left[ \frac{1+\sqrt{K}}{1+(1-\alpha)\sqrt{K}} \right]^i \cdot \left[ 1 + \frac{\sum_{i=1}^{n} v_i}{v_0} \right] \cdot \ln \frac{1}{1+\sqrt{K}} \left[ \frac{1+\alpha}{1-\alpha} + \sqrt{K} \right]$$

$$\text{(III)} \quad v_i = \frac{\beta A v_0}{y} \left[ \frac{\alpha\sqrt{K}}{1+\sqrt{K}} \right] \left[ 1 - \frac{\alpha\sqrt{K}}{1+\sqrt{K}} \right]^{i-1}$$

où

- $t_0$ représente une durée de la réaction écoulée avant que ledit réactif soit ajouté pour la première fois,
- $t_i$ représente une série de moments discrets auxquels ledit réactif est ajouté après l'écoulement de $t_0$,
- $v_0$ représente la quantité dudit mélange de matières premières au début de la réaction,
- $v_i$ représente la quantité dudit réactif ajoutée auxdits moments discrets $t_i$ respectivement,
- $k_i$ représente une constante de vitesse de réaction spécifique de la réaction,
- $K$ représente une constante d'équilibre spécifique de la réaction,
- $A$ représente la concentration initiale dudit mélange de matières premières,
- $\alpha$ représente le rapport de concentration entre ledit produit intermédiaire et une concentration d'équilibre théorique de celui-ci,
- $\beta$ représente le rapport stoechiométrique entre ledit réactif et ledit produit intermédiaire, et

y représente la concentration dudit réactif.

**2.** Dispositif de synthèse automatisé selon la revendication 1, caractérisé en ce que ladite constante de vitesse de reaction ($k_1$) et ladite constante d'équilibre (K) sont déterminées sur la base d'une constante de substitution ($E_s$) conformément à :

$k_1 = A \exp(B \times E_s)$
$K = C \exp(D \times E_s)$

où A, a, C et D représentent des constantes spécifiques de la réaction.

**3.** Dispositif de synthèse automatisé selon la revendication 1 ou 2, caractérisé en ce que les données relatives auxdits moments ($t_0$, $t_i$) et auxdites quantités ($v_i$) calculées selon lesdites expressions (I), (II) et (III) sont enregistrées avec des informations d'identification de la réaction dans une mémoire dudit ordinateur.

**4.** Dispositif de synthèse de composés automatisé selon l'une quelconque des revendications 1 à 3, caractérisé en ce que différents réactifs sont ajoutés à des moments discrets ($t_i$).

**5.** Procédé de synthèse de composés automatisée pour la production d'un produit donné par une série d'étapes de traitement de synthèse comprenant : l'apport d'un mélange de matières premières, d'un réactif et d'un solvant , une étape de réaction de synthèse , une étape de purification et une étape de purification du produit,

dans lequel ledit réactif est ajouté pendant l'étape de réaction de synthèse audit mélange de matières premières dans une phase d'équilibre dans laquelle les composants de départ dudit mélange de matières premières sont à l'équilibre avec un produit intermédiaire de ceux-ci, afin de faire subir, ainsi, audit réactif, une réaction avec ledit produit intermédiaire pour produire le produit souhaité,

caractérisée en ce que l'addition dudit réactif est commandée par un ordinateur programme de telle sorte que ledit réactif soit successivement ajouté à des moments discrets ($t_0$, $t_i$) dans des quantités ($v_i$) déterminées par les expressions (I), (II) et (III) suivantes respectivement :

$$\text{(I)} \quad t_0 = \frac{\sqrt{K}}{2Ak_1} \ln \frac{1}{1+\sqrt{K}} \left[ \frac{1+\alpha}{1-\alpha} + \sqrt{K} \right]$$

$$\text{(II)} \quad t_i = \frac{\sqrt{K}}{2Ak_1} \left[ \frac{1+\sqrt{K}}{1+(1-\alpha)\sqrt{K}} \right]^i \cdot$$

$$\left[ 1 + \frac{\sum_{i=1}^{n} v_i}{V_0} \right] \cdot \ln \frac{1}{1+\sqrt{K}} \left[ \frac{1+\alpha}{1-\alpha} + \sqrt{K} \right]$$

$$\text{(III)} \quad v_i = \frac{\beta A V_0}{y} \left[ \frac{\alpha \sqrt{K}}{1+\sqrt{K}} \right] \left[ 1 - \frac{\alpha \sqrt{K}}{1+\sqrt{K}} \right]^{i-1}$$

où

| | |
|---|---|
| $t_0$ | représente une durée de la réaction écoulée avant que ledit réactif soit ajouté pour la première fois, |
| $t_i$ | représente une série de moments discrets auxquels ledit réactif est ajouté après l'écoulement de $t_0$, |
| $v_0$ | représente la quantité dudit mélange de matières premières au début de la réaction, |
| $v_i$ | représente la quantité dudit réactif ajoutée auxdits moments discrets $t_i$ respectivement, |
| $k_i$ | représente une constante de vitesse de réaction spécifique de la réaction, |
| K | représente une constante d'équilibre spécifique de la réaction, |
| A | représente la concentration initiale dudit mélange de matières premières, |
| $\alpha$ | représente le rapport de concentration entre ledit produit intermédiaire et une concentration d'équilibre théorique de celui-ci, |
| $\beta$ | représente le rapport stoechiométrique entre ledit réactif et ledit produit intermédiaire, et |
| y | représente la concentration dudit réactif. |

**6.** Procédé de synthèse de composés automatisé selon la revendication 5, caractérisé en ce que ladite constante de vitesse de réaction ($k_1$) et ladite constante d'équilibre (K) sont déterminées sur la base d une constante de substitution ($E_s$) conformément à :

$$k_1 = A \exp (B \times E_s)$$
$$K = C \exp (D \times E_s)$$

où A, B, C et D représentent des constantes spécifiques de la réaction.

**7.** Procédé de synthèse de composés automatisée selon la revendication 5 ou 6, caractérisé en ce que les données relatives auxdits moments ($t_0$, $t_i$) et auxdites quantités ($v_i$) calculées selon lesdites expressions (I), (II) et (III) sont enregistrées avec des informations d'identification de la réaction dans une mémoire dudit ordinateur.

**8.** Procédé de synthèse de composés automatisée selon l'une quelconque des revendications 5 à 7, caractérisé en ce que différents réactifs sont ajoutés à des moments discrets ($t_i$).

FIG. 1

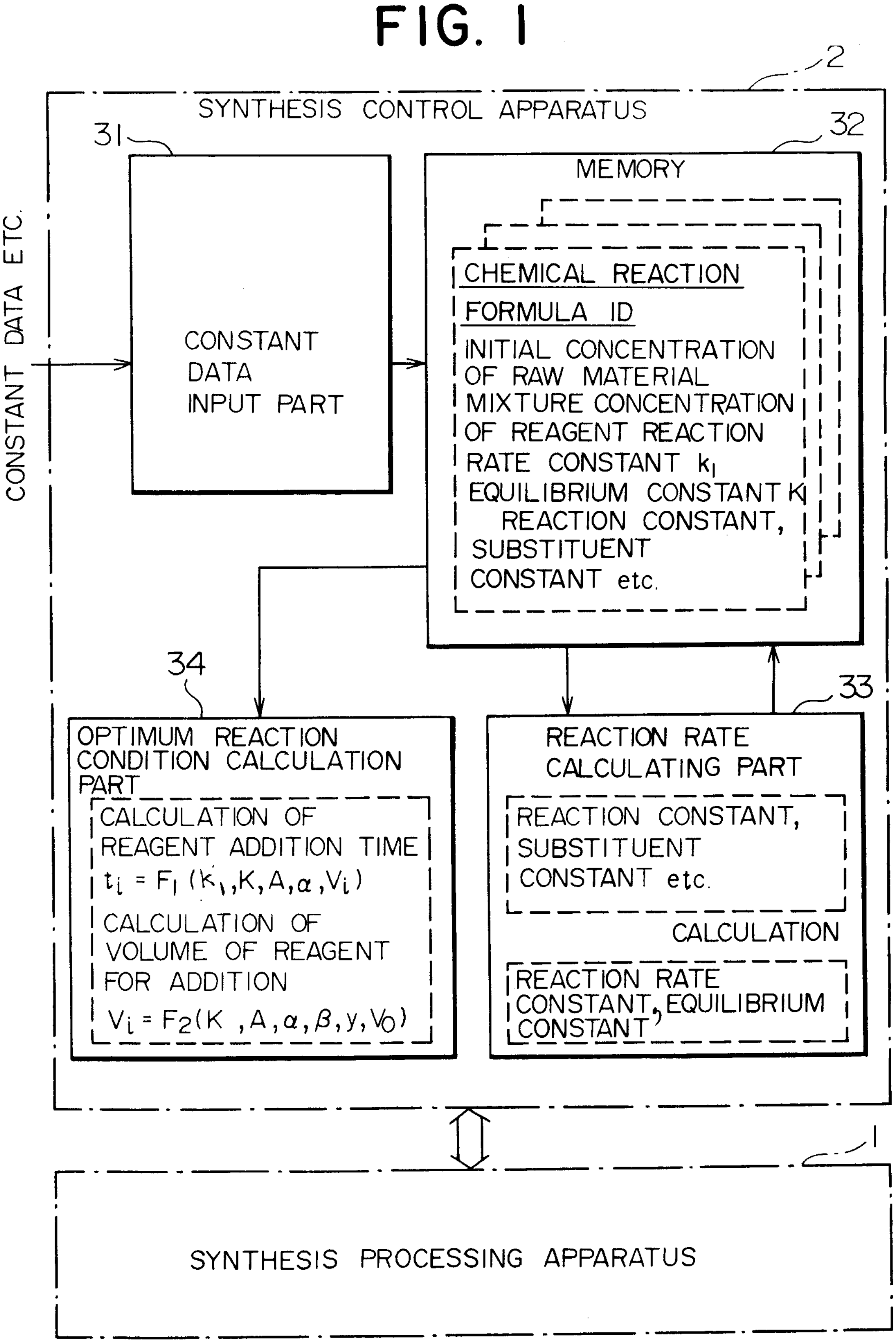
2
SYNTHESIS CONTROL APPARATUS
31
32
CONSTANT DATA ETC.
CONSTANT DATA INPUT PART
MEMORY
CHEMICAL REACTION FORMULA ID
INITIAL CONCENTRATION OF RAW MATERIAL
MIXTURE CONCENTRATION OF REAGENT REACTION RATE CONSTANT $k_I$
EQUILIBRIUM CONSTANT K
REACTION CONSTANT,
SUBSTITUENT CONSTANT etc.
34
33
OPTIMUM REACTION CONDITION CALCULATION PART
CALCULATION OF REAGENT ADDITION TIME
$t_i = F_1(k_1, K, A, \alpha, V_i)$
CALCULATION OF VOLUME OF REAGENT FOR ADDITION
$V_i = F_2(K, A, \alpha, \beta, y, V_0)$
REACTION RATE CALCULATING PART
REACTION CONSTANT, SUBSTITUENT CONSTANT etc.
CALCULATION
REACTION RATE CONSTANT, EQUILIBRIUM CONSTANT
1
SYNTHESIS PROCESSING APPARATUS

FIG. 2

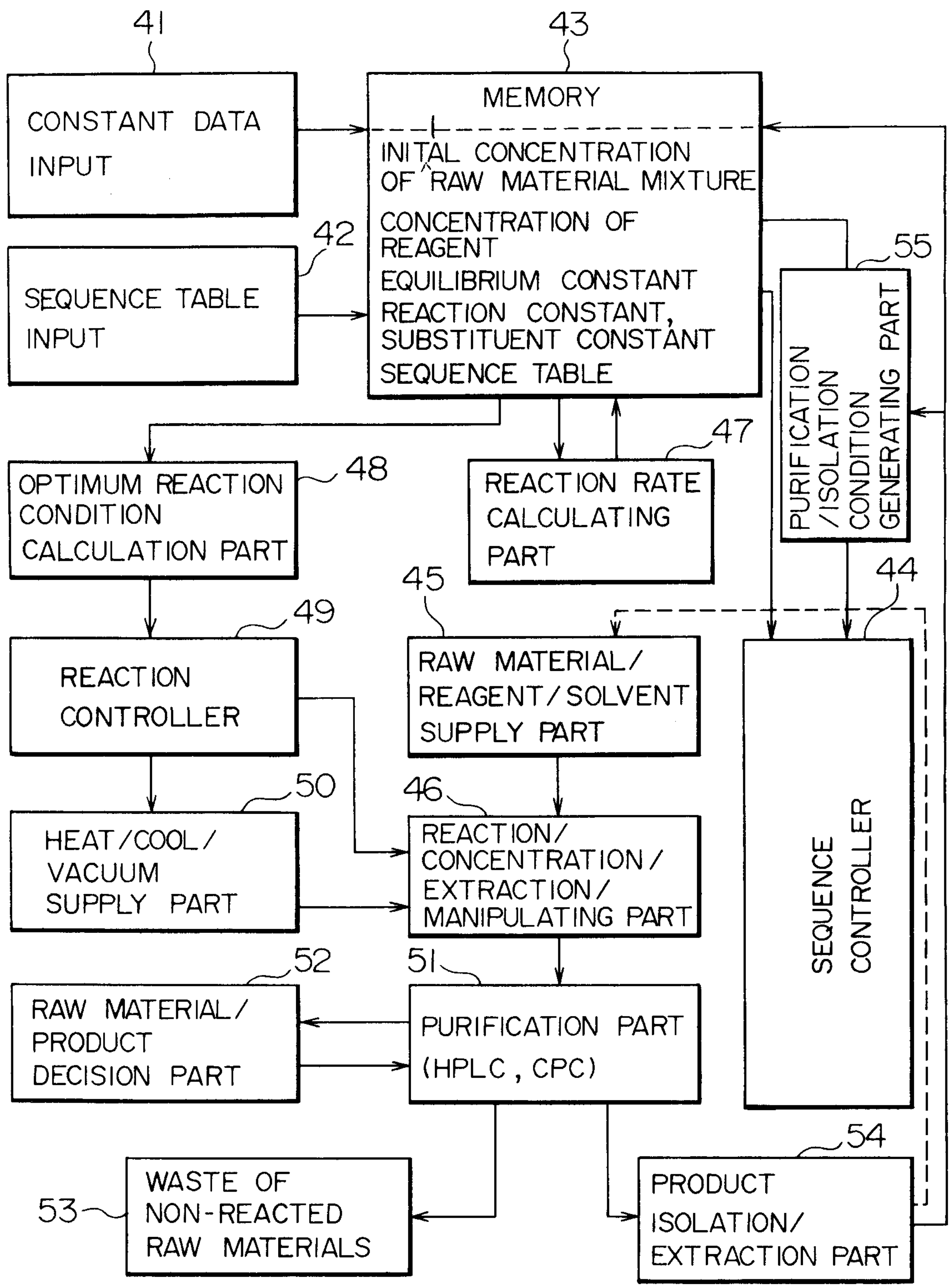
41
43
CONSTANT DATA INPUT
MEMORY
INITIAL CONCENTRATION OF RAW MATERIAL MIXTURE
CONCENTRATION OF REAGENT
EQUILIBRIUM CONSTANT
REACTION CONSTANT, SUBSTITUENT CONSTANT
SEQUENCE TABLE
42
SEQUENCE TABLE INPUT
55
PURIFICATION /ISOLATION CONDITION GENERATING PART
47
48
OPTIMUM REACTION CONDITION CALCULATION PART
REACTION RATE CALCULATING PART
45
44
49
REACTION CONTROLLER
RAW MATERIAL/ REAGENT/SOLVENT SUPPLY PART
SEQUENCE CONTROLLER
50
46
HEAT/COOL/ VACUUM SUPPLY PART
REACTION/ CONCENTRATION/ EXTRACTION/ MANIPULATING PART
52
51
RAW MATERIAL/ PRODUCT DECISION PART
PURIFICATION PART (HPLC, CPC)
54
53
WASTE OF NON-REACTED RAW MATERIALS
PRODUCT ISOLATION/ EXTRACTION PART

FIG. 3

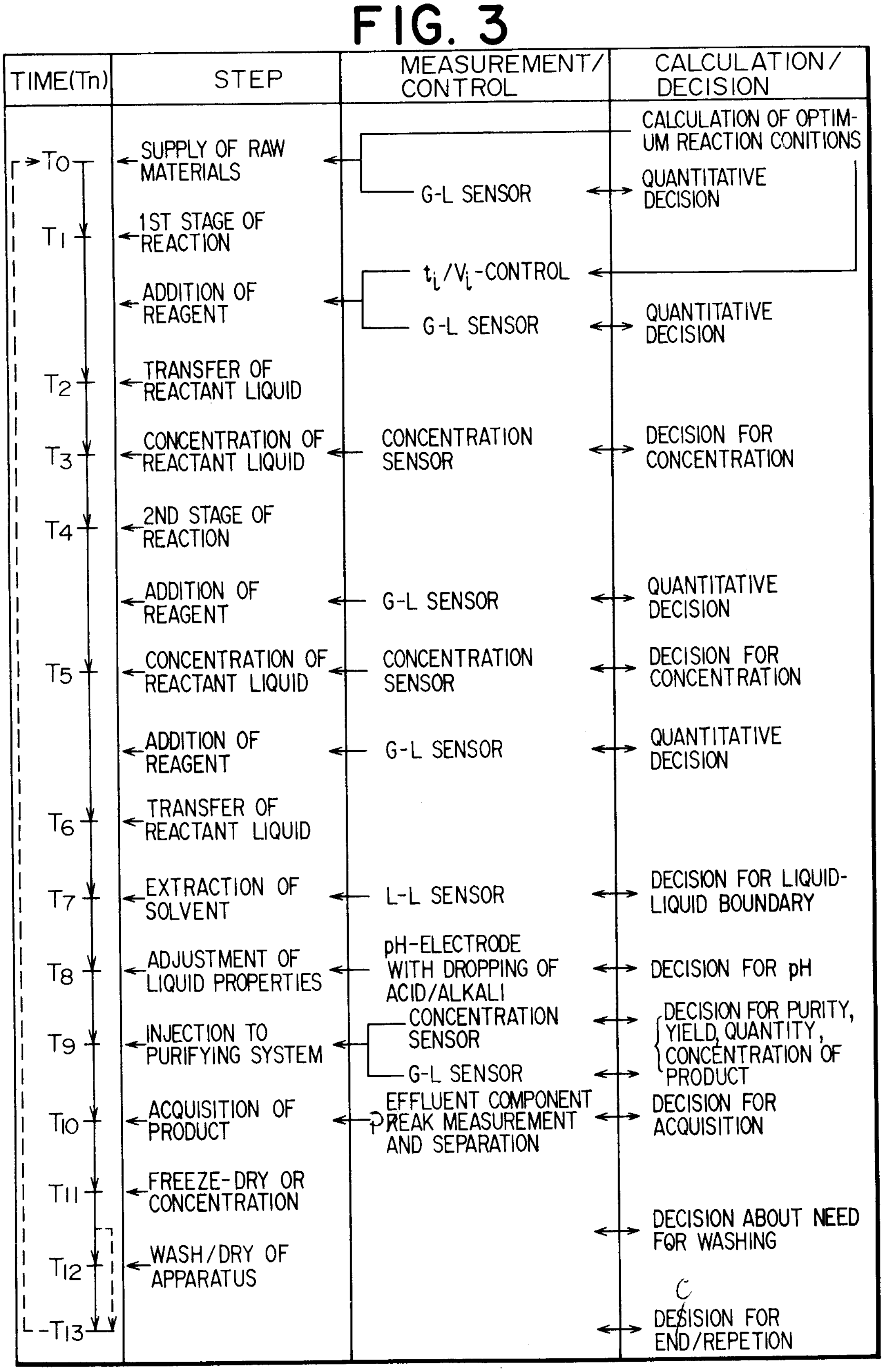
TIME(Tn)
STEP
MEASUREMENT/ CONTROL
CALCULATION/ DECISION
CALCULATION OF OPTIMUM REACTION CONITIONS
To
SUPPLY OF RAW MATERIALS
G-L SENSOR
QUANTITATIVE DECISION
T1
1ST STAGE OF REACTION
$t_i/V_i$-CONTROL
ADDITION OF REAGENT
G-L SENSOR
QUANTITATIVE DECISION
T2
TRANSFER OF REACTANT LIQUID
T3
CONCENTRATION OF REACTANT LIQUID
CONCENTRATION SENSOR
DECISION FOR CONCENTRATION
T4
2ND STAGE OF REACTION
ADDITION OF REAGENT
G-L SENSOR
QUANTITATIVE DECISION
T5
CONCENTRATION OF REACTANT LIQUID
CONCENTRATION SENSOR
DECISION FOR CONCENTRATION
ADDITION OF REAGENT
G-L SENSOR
QUANTITATIVE DECISION
T6
TRANSFER OF REACTANT LIQUID
T7
EXTRACTION OF SOLVENT
L-L SENSOR
DECISION FOR LIQUID-LIQUID BOUNDARY
T8
ADJUSTMENT OF LIQUID PROPERTIES
pH-ELECTRODE WITH DROPPING OF ACID/ALKALI
DECISION FOR pH
T9
INJECTION TO PURIFYING SYSTEM
CONCENTRATION SENSOR
G-L SENSOR
DECISION FOR PURITY, YIELD, QUANTITY, CONCENTRATION OF PRODUCT
T10
ACQUISITION OF PRODUCT
EFFLUENT COMPONENT PEAK MEASUREMENT AND SEPARATION
DECISION FOR ACQUISITION
T11
FREEZE-DRY OR CONCENTRATION
DECISION ABOUT NEED FOR WASHING
T12
WASH/DRY OF APPARATUS
T13
DECISION FOR END/REPETION

FIG. 4

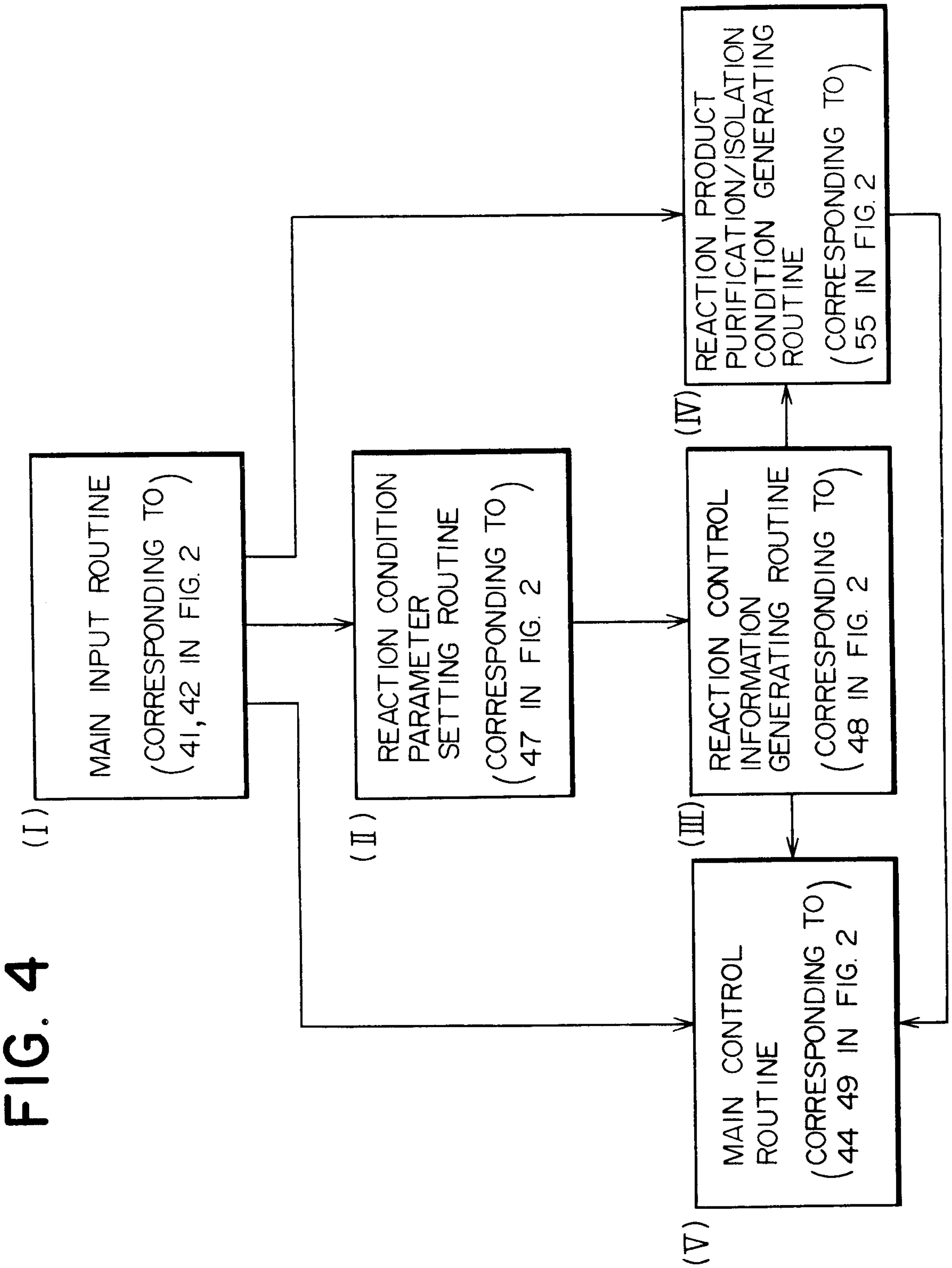
(I)
MAIN INPUT ROUTINE
(CORRESPONDING TO 41, 42 IN FIG. 2)
(II)
REACTION CONDITION PARAMETER SETTING ROUTINE
(CORRESPONDING TO 47 IN FIG. 2)
(III)
REACTION CONTROL INFORMATION GENERATING ROUTINE
(CORRESPONDING TO 48 IN FIG. 2)
(IV)
REACTION PRODUCT PURIFICATION/ISOLATION CONDITION GENERATING ROUTINE
(CORRESPONDING TO 55 IN FIG. 2)
(V)
MAIN CONTROL ROUTINE
(CORRESPONDING TO 44 49 IN FIG. 2)

# FIG. 5(A)

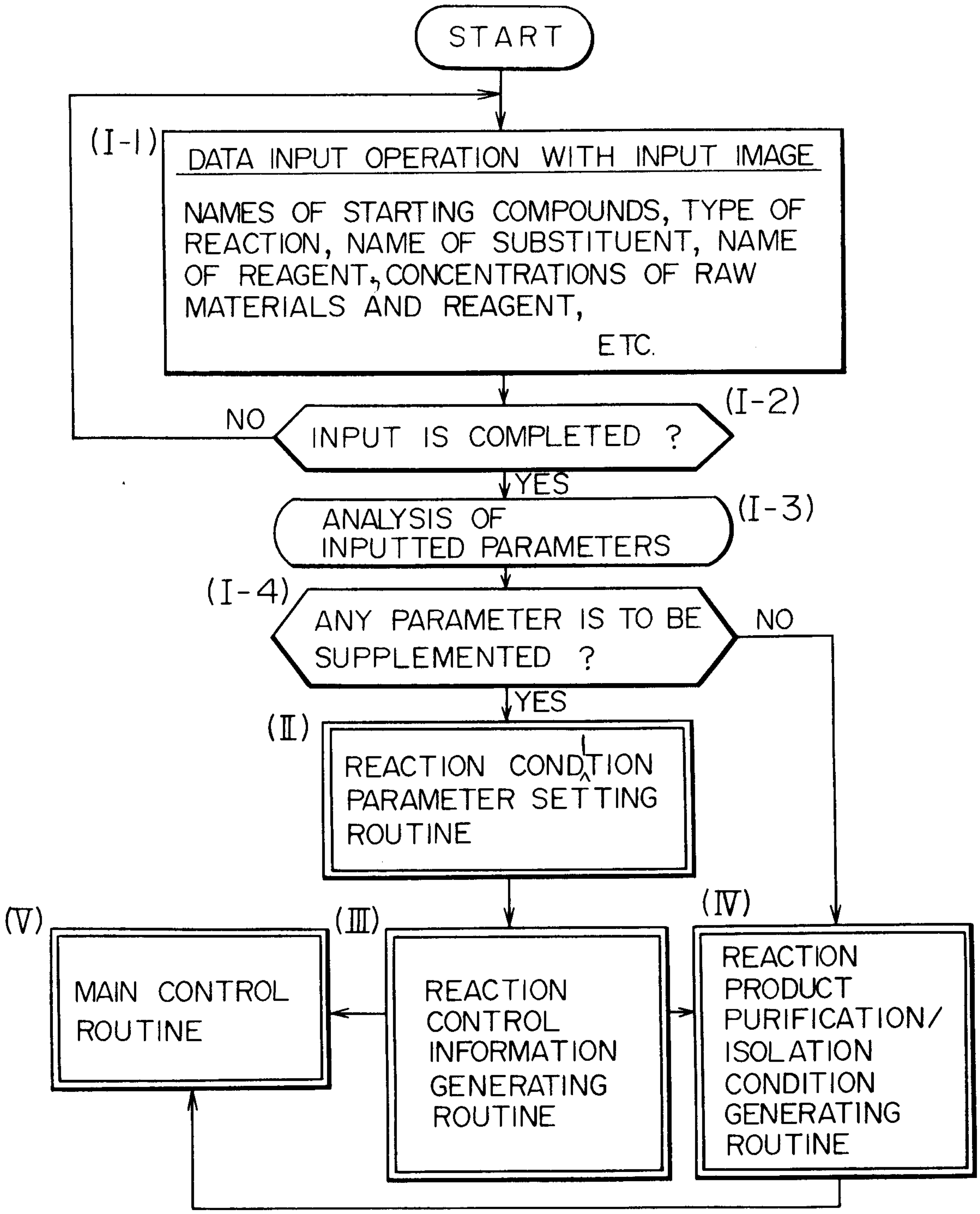
START
(I-1)
DATA INPUT OPERATION WITH INPUT IMAGE
NAMES OF STARTING COMPOUNDS, TYPE OF REACTION, NAME OF SUBSTITUENT, NAME OF REAGENT, CONCENTRATIONS OF RAW MATERIALS AND REAGENT,
ETC.
(I-2)
INPUT IS COMPLETED ?
NO
YES
(I-3)
ANALYSIS OF INPUTTED PARAMETERS
(I-4)
ANY PARAMETER IS TO BE SUPPLEMENTED ?
NO
YES
(II)
REACTION CONDITION PARAMETER SETTING ROUTINE
(V)
MAIN CONTROL ROUTINE
(III)
REACTION CONTROL INFORMATION GENERATING ROUTINE
(IV)
REACTION PRODUCT PURIFICATION/ ISOLATION CONDITION GENERATING ROUTINE

FIG. 5(B)

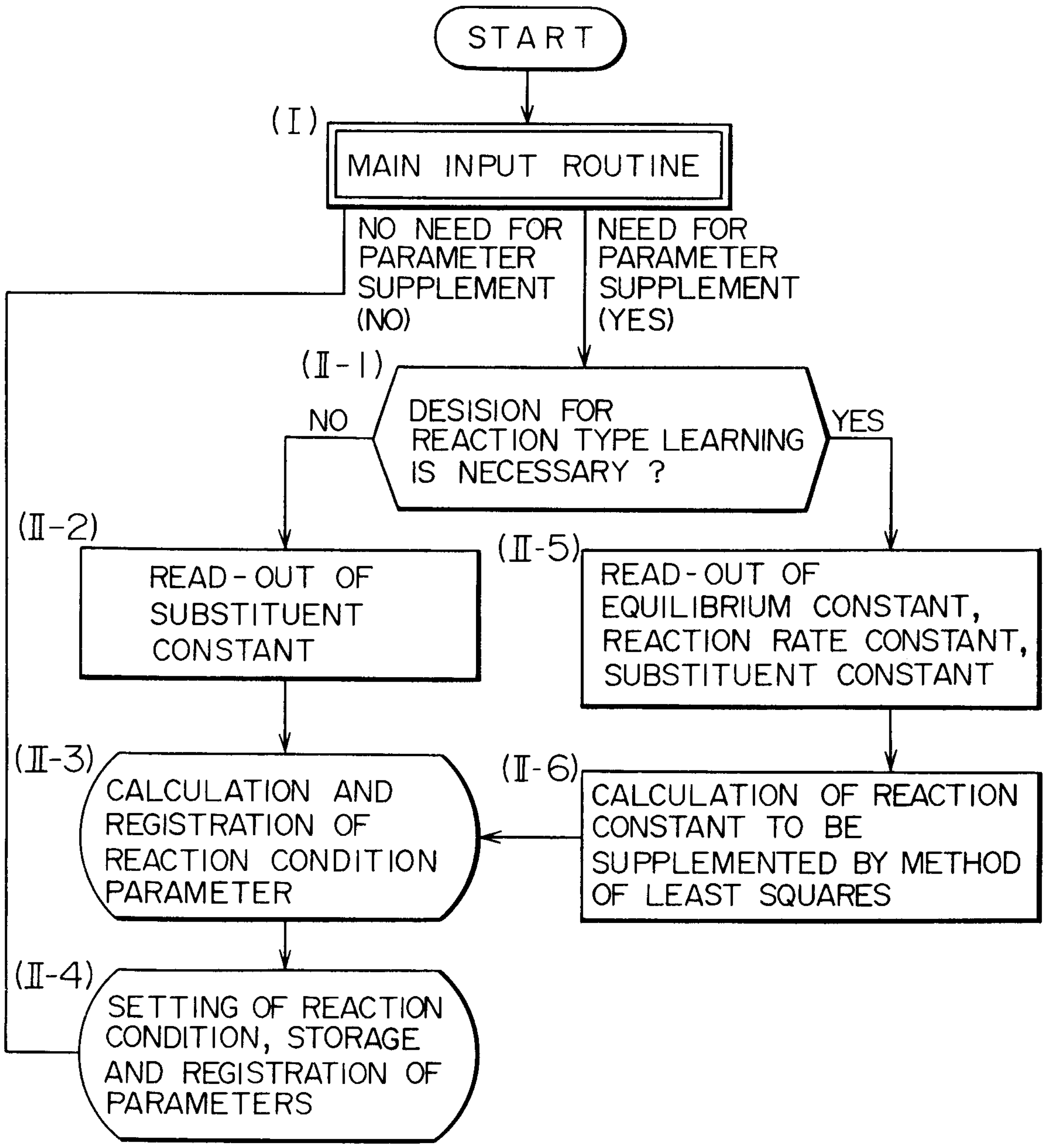
START
(I)
MAIN INPUT ROUTINE
NO NEED FOR PARAMETER SUPPLEMENT (NO)
NEED FOR PARAMETER SUPPLEMENT (YES)
(II-1)
DESISION FOR REACTION TYPE LEARNING IS NECESSARY ?
NO
YES
(II-2)
READ-OUT OF SUBSTITUENT CONSTANT
(II-5)
READ-OUT OF EQUILIBRIUM CONSTANT, REACTION RATE CONSTANT, SUBSTITUENT CONSTANT
(II-3)
CALCULATION AND REGISTRATION OF REACTION CONDITION PARAMETER
(II-6)
CALCULATION OF REACTION CONSTANT TO BE SUPPLEMENTED BY METHOD OF LEAST SQUARES
(II-4)
SETTING OF REACTION CONDITION, STORAGE AND REGISTRATION OF PARAMETERS

FIG. 5(C)

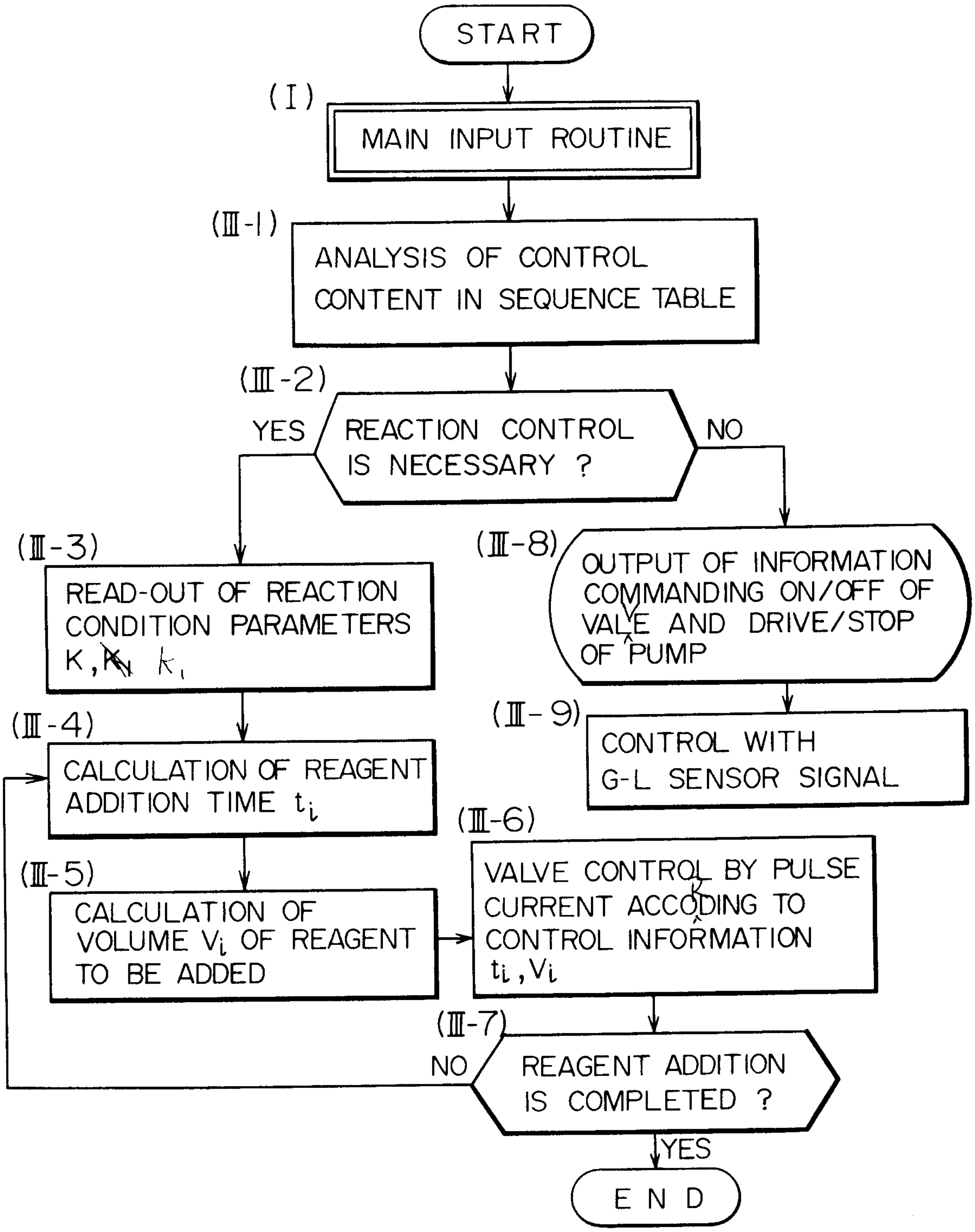
START
(I)
MAIN INPUT ROUTINE
(III-1)
ANALYSIS OF CONTROL CONTENT IN SEQUENCE TABLE
(III-2)
REACTION CONTROL IS NECESSARY ?
YES
NO
(III-3)
READ-OUT OF REACTION CONDITION PARAMETERS K, k
(III-8)
OUTPUT OF INFORMATION COMMANDING ON/OFF OF VALVE AND DRIVE/STOP OF PUMP
(III-4)
CALCULATION OF REAGENT ADDITION TIME ti
(III-9)
CONTROL WITH G-L SENSOR SIGNAL
(III-5)
CALCULATION OF VOLUME Vi OF REAGENT TO BE ADDED
(III-6)
VALVE CONTROL BY PULSE CURRENT ACCORDING TO CONTROL INFORMATION ti, Vi
(III-7)
REAGENT ADDITION IS COMPLETED ?
NO
YES
END

FIG. 5(D)

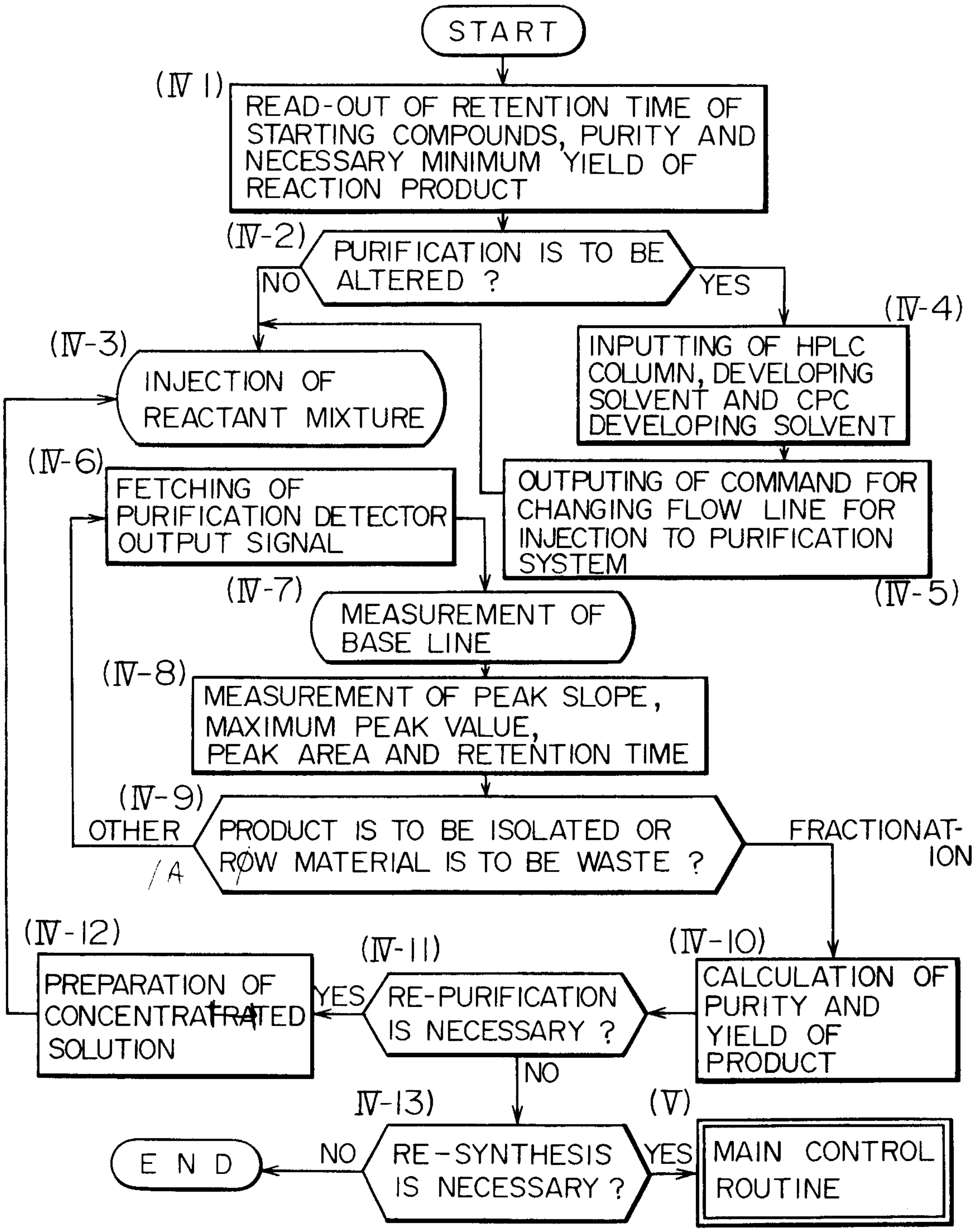
START
(IV 1)
READ-OUT OF RETENTION TIME OF STARTING COMPOUNDS, PURITY AND NECESSARY MINIMUM YIELD OF REACTION PRODUCT
(IV-2)
PURIFICATION IS TO BE ALTERED ?
NO
YES
(IV-4)
INPUTTING OF HPLC COLUMN, DEVELOPING SOLVENT AND CPC DEVELOPING SOLVENT
(IV-3)
INJECTION OF REACTANT MIXTURE
(IV-5)
OUTPUTING OF COMMAND FOR CHANGING FLOW LINE FOR INJECTION TO PURIFICATION SYSTEM
(IV-6)
FETCHING OF PURIFICATION DETECTOR OUTPUT SIGNAL
(IV-7)
MEASUREMENT OF BASE LINE
(IV-8)
MEASUREMENT OF PEAK SLOPE, MAXIMUM PEAK VALUE, PEAK AREA AND RETENTION TIME
(IV-9)
OTHER
PRODUCT IS TO BE ISOLATED OR RØW MATERIAL IS TO BE WASTE ?
FRACTIONATION
(IV-10)
CALCULATION OF PURITY AND YIELD OF PRODUCT
(IV-11)
RE-PURIFICATION IS NECESSARY ?
YES
NO
(IV-12)
PREPARATION OF CONCENTRATED SOLUTION
IV-13)
RE-SYNTHESIS IS NECESSARY ?
NO
YES
END
(V)
MAIN CONTROL ROUTINE

FIG. 5(E)

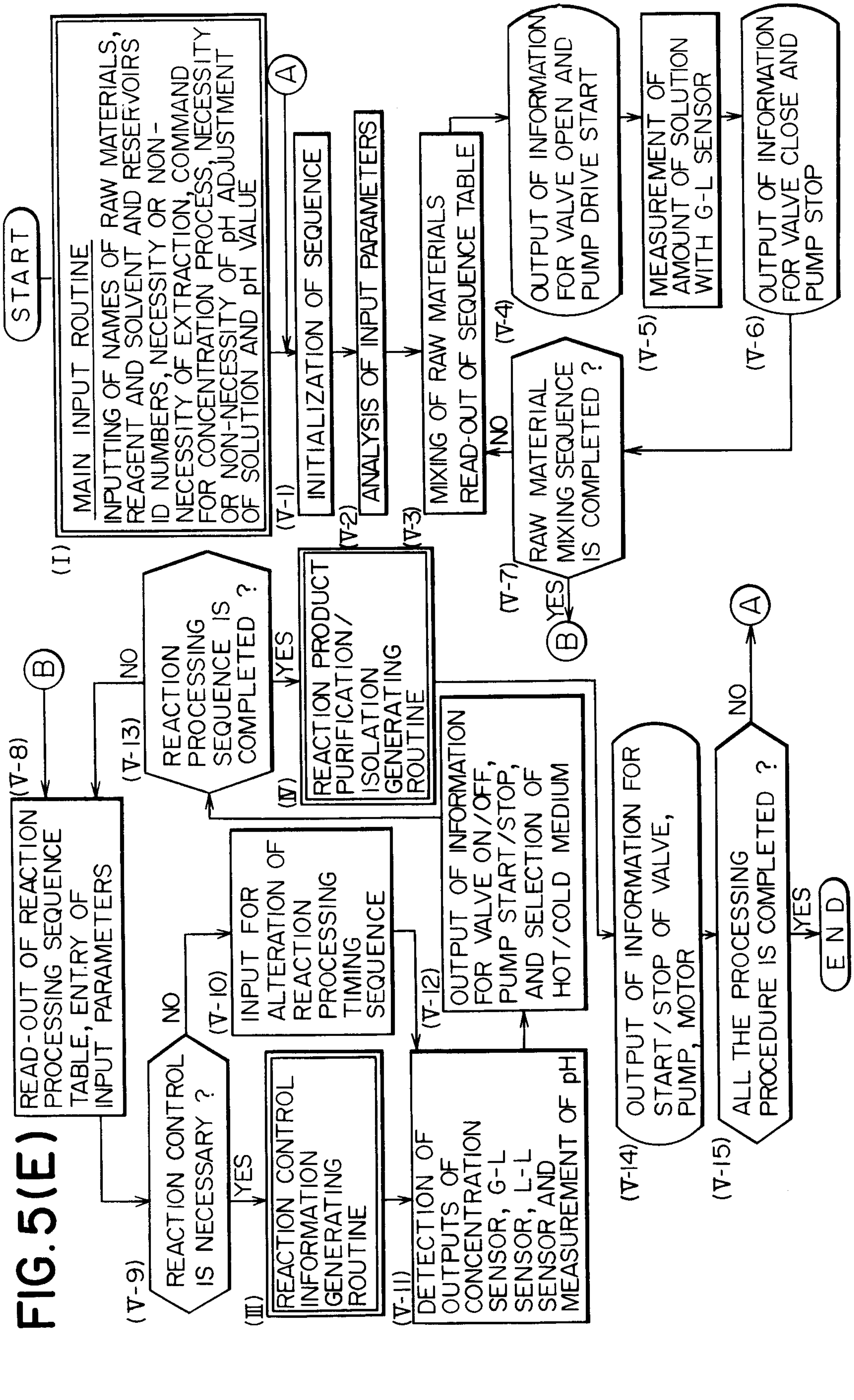

START
(I)
MAIN INPUT ROUTINE
INPUTTING OF NAMES OF RAW MATERIALS, REAGENT AND SOLVENT AND RESERVOIRS ID NUMBERS, NECESSITY OR NON-NECESSITY OF EXTRACTION, COMMAND FOR CONCENTRATION PROCESS, NECESSITY OR NON-NECESSITY OF pH ADJUSTMENT OF SOLUTION AND pH VALUE
A
(V-1)
INITIALIZATION OF SEQUENCE
(V-2)
ANALYSIS OF INPUT PARAMETERS
(V-3)
MIXING OF RAW MATERIALS READ-OUT OF SEQUENCE TABLE
(V-4)
OUTPUT OF INFORMATION FOR VALVE OPEN AND PUMP DRIVE START
(V-5)
MEASUREMENT OF AMOUNT OF SOLUTION WITH G-L SENSOR
(V-6)
OUTPUT OF INFORMATION FOR VALVE CLOSE AND PUMP STOP
(V-7)
RAW MATERIAL MIXING SEQUENCE IS COMPLETED ?
NO
YES
B
(V-8)
READ-OUT OF REACTION PROCESSING SEQUENCE TABLE, ENTRY OF INPUT PARAMETERS
(V-9)
REACTION CONTROL IS NECESSARY ?
YES
NO
(III)
REACTION CONTROL INFORMATION GENERATING ROUTINE
(V-10)
INPUT FOR ALTERATION OF REACTION PROCESSING TIMING SEQUENCE
(V-11)
DETECTION OF OUTPUTS OF CONCENTRATION SENSOR, G-L SENSOR, L-L SENSOR AND MEASUREMENT OF pH
(V-12)
OUTPUT OF INFORMATION FOR VALVE ON/OFF, PUMP START/STOP, AND SELECTION OF HOT/COLD MEDIUM
(V-13)
REACTION PROCESSING SEQUENCE IS COMPLETED ?
NO
YES
(IV)
REACTION PRODUCT PURIFICATION/ ISOLATION GENERATING ROUTINE
(V-14)
OUTPUT OF INFORMATION FOR START/STOP OF VALVE, PUMP, MOTOR
(V-15)
ALL THE PROCESSING PROCEDURE IS COMPLETED ?
NO
A
YES
END

FIG. 6
PRIOR ART